Europäisches Patentamt

European Patent Office

Office européen des brevets

(19)

(11) **EP 1 277 288 B1**

(12) **EUROPÄISCHE PATENTSCHRIFT**

(45) Veröffentlichungstag und Bekanntmachung des Hinweises auf die Patenterteilung:
**29.12.2004   Patentblatt 2004/53**

(51) Int Cl.⁷: $\text{H04B 1/707}$, $\text{H04B 7/26}$

(21) Anmeldenummer: **01993988.3**

(22) Anmeldetag: **25.10.2001**

(86) Internationale Anmeldenummer:
**PCT/DE2001/004058**

(87) Internationale Veröffentlichungsnummer:
**WO 2002/039614 (16.05.2002 Gazette 2002/20)**

(54) **EINRICHTUNG UND VERFAHREN FÜR DIE SYNCHRONISATION IN EINEM FUNKKOMMUNIKATIONSSYSTEM**

DEVICE AND METHOD FOR PERFORMING SYNCHRONIZATION IN A RADIO COMMUNICATIONS SYSTEM

PROCEDE ET DISPOSITIF POUR SYNCHRONISER UN SYSTEME DE RADIOCOMMUNICATION

(84) Benannte Vertragsstaaten:
**AT BE CH CY DE DK ES FI FR GB GR IE IT LI LU MC NL PT SE TR**
Benannte Erstreckungsstaaten:
**LT LV**

(30) Priorität: **07.11.2000  DE 10056086**

(43) Veröffentlichungstag der Anmeldung:
**22.01.2003   Patentblatt 2003/04**

(73) Patentinhaber:
• **IQ Wireless GmbH**
  **12489 Berlin (DE)**
• **JÄCKEL, Klaus**
  **12529 Schönefeld (DE)**
• **HACHENBERGER, Andreas**
  **01108 Dresden (DE)**
• **Jaeger, Klaus**
  **12555 Berlin (DE)**
• **Kramp, Eberhard**
  **16341 Zepernick (DE)**
• **Reibe, Mathias**
  **06846 Dessau (DE)**
• **STADLER, Bruno**
  **D-12487 Berlin (DE)**

(72) Erfinder:
• **JÄCKEL, Klaus**
  **12529 Schönefeld (DE)**
• **HACHENBERGER, Andreas**
  **01108 Dresden (DE)**
• **JAEGER, Klaus**
  **12555 Berlin (DE)**
• **KRAMP, Eberhard**
  **16341 Zepernick (DE)**
• **REIBE, Mathias**
  **06846 Dessau (DE)**
• **STADLER, Bruno**
  **12487 Berlin (DE)**

(56) Entgegenhaltungen:
**WO-A-99/25080**

**Beschreibung**

Die vorliegende Erfindung betrifft Verfahren, die stationären Teilnehmern den drahtlosen Zugang zum Internet und zum PSTN ermöglichen, speziell der Art, daß sowohl der Zugang zum Internet als auch der Zugang zum PSTN direkte Zugänge sind, und ein Teilnehmer beide Zugänge simultan und unabhängig voneinander nutzen kann. Im Detail betrifft die Erfindung ein Verfahren zur Realisierung der Frequenz-, Trägerphasen-, Codephasen- und Framesynchronisation in einem solchen System.

Drahtlose lokale Zugangsnetze zum PSTN haben sich im letzten Jahrzehnt immer mehr durchgesetzt und sind inzwischen landläufig unter dem Begriff WLL (Wireless Local Loop) eingeführt. Diese Zugangsnetze sind unter dem Aspektentwickelt, daß sie dem Teilnehmer dietelekommunikative Grundversorgung als POTS (Plain Old Telephone Service) bieten. Sie unterscheiden sich insofern von den Mobilfunknetzen, die das Merkmal der Mobilität zusätzlich zu einer anderweitig bereis vorhandenen Grundversorgung realisieren, ohne diese ersetzen zu wollen oder ersetzen zu können. Ein daraus resultierendes unterscheidendes Merkmal ist, daß bei WLL die Teilnehmerstationen keine Endgeräte darstellen, sondern Schnittstellen für den Anschluß von Endgeräten nach Wahl des Teilnehmers aufweisen, während bei Mobilfunknetzen die Teilnehmerstationen Endgerätefunktion besitzen.

Ein typischer Vertreter der ersten Generation von WLL sind die in [1] beschriebenen Einrichtungen und Verfahren. Inzwischen sind vielfältige Weiterentwicklungen erfolgt, die vor allem den Übergang von der analogen zur digitalen Übertragung im Airinterface, die Steigerung der Datenraten für Modem- und Faxübertragungen und die Erweiterung des Diensteangebotes beinhalten.

Für heutige Bedingungen sind diese Einrichtungen inclusive der erfolgten Weiterentwicklungen nicht ausreichend. Der Zugang zum Internet ist inzwischen ein unverzichtbares Telekommunikationsangebot. Die existierenden WLL erlauben zwar den Zugang zum Internet mittels Modem über das PSTN, jedoch ist dies auf Grund der geringen Bandbreiten / Datenraten, die der Sprachübertragung im Airinterface von WLL der bisherigen Art zur Verfügung gestellt werden, uneffektiv. Zudem ist der Zugang zum PSTN über WLL meist die einzige Kommunikationsverbindung des Teilnehmers und die Belegung durch einen Internetzugritf lästig und behindernd und der Akzeptanz von WLL abträglich.

Entsprechend sind vielerorts Bestrebungen im Gange, die Mängel der bestehenden Einrichtungen durch neue Lösungsansätze zu überwinden. Beispiele sind in den nachfolgenden Ausführungen beschrieben.

In der Veröffentlichung [2] werden ein Verfahren und eine Einrichtung beschrieben, die es mobilen Teilnehmern ermöglichen, über Funk auf das Internet zuzugreifen. Das Airinterface beruht auf den im Anspruch 1 von [2] beschriebenen Verfahren der Übertragung mittels OFDM (Orthogonal Frequency Division Multiplex), einer zwei- oder mehrwertigen Differenz-Phasenmodulation, dem Empfang unter Verwendung von Antennenarrays (Smart Antennas) und phasenbewerteter Addition der Signale aller Einzelantennen jeweils für jeden Subträger und der Demodulation der so gewonnenen Empfangssignale durch Bestimmung der Phasendifferenz zwischen jeweils zwei benachbarten Subträgern für jeweils alle Subträgerpaare.

In den korrespondierenden Veröffentlichungen [3] und [4] werden ein Verfahren und eine Einrichtung beschrieben, die es mobilen Teilnehmern ermöglichen, über Funk auf das Internet zuzugreifen. Das Verfahren hat vor allem die Zielstellung, eine schmalbandige Übertragung im Airinterface zu realisieren, wie sie dem Stand der Technik entsprechend von mobilen Einrichtungen meist nur unterstützt wird.

Hierzu wird erstens im Airinterface der Informationsaustausch zwischen Teilnehmerstation und Basisstation nicht als Internetverbindung mit TCP/IP durchgeführt. Der Datenaustausch zwischen dem "Wireless Client" der Teilnehmerstation und einem "Wireless Access Point" in der Basisstation erfolgt mit weniger datenintensiven Verfahren und Protokollen. In der Basisstation werden die Informationen vom "Wireless Access Point" über einen "Wireless Network Tunneler" zu einem Proxy Server (und umgekehrt) übertragen. Erst der Proxy Server stellt eine reguläre Verbindung zum Internet mit TCP/IP her.

Hierzu wird zweitens mit einer verteilten Web-Site gearbeitet, indem zum Teilnehmer eine Web-Site nur teilweise übertragen wird. Die übertragene Information ist dahingehend eingeschränkt, daß nur Auswahlelemente zum Teilnehmer übertragen werden, ausreichend dafür, daß der Teilnehmer weitere Anforderungen definieren und über das Airinterface an die Einrichtungen der Basisstation schicken kann, die die anderen Teile der Web-Site verwalten. Diese Einrichtungen schicken an den Teilnehmer die speziell angeforderten Teile der Web-Site oder schicken eine daraus resultierende Anforderung in das Internet. Eine Antwort aus dem Internet wird dann in der gleichen Form mit dem Teilnehmer abgearbeitet.

Das Verfahren der Veröffentlichungen [3] und [4] kann dem Teilnehmer damit einen inhaltlich nicht eingeschränkten Zugriff zum Internet bieten, jedoch ist der Zugriff in der Handhabung aufwendig und langsam. Für und von mobilen Teilnehmern werden solche einschränkenden Bedingungen jedoch meist akzeptiert.

In der Veröffentlichung [5] ([6]; [7]) wird ein Verfahren beschrieben, welches es Teilnehmern ermöglicht, über Funk auf das Internet zuzugreifen. Hierfür sollen die bestehenden Mobilfunknetze genutzt werden, indem ein Computer über ein "cellular telephone modem" mit der mobilen Teilnehmerstation verbunden wird. Das Konzept kann, bei Anwendung entsprechender Computer, als bedingt mobil oder besser halbstationär bezeichnet werden. Die Veröffentlichung [5] befaßt sich nicht mit dem Airinterface, welches als vom Mobilfunknetz geboten und existent betrachtet wird, als vielmehr mit den Problemen des Routing, Tunneling und der Authentifizierung in den verschiedenen Netzen. Ein besonderer Aspekt der dargestellten Architektur ist, daß die Verbindungen aus dem Mobilnetz über ein "Communication Chassis" zu einem bestimmten Internet-Serviceprovider (ISP) geroutet werden. Mobilität vorausgesetzt können somit Zugriffsversuche von Teilnehmern erfolgen, die nicht Kunden dieses bestimmten Serviceproviders sind. Es wird für diesen Fall eine Lösung dargestellt, wie mobilen Teilnehmern der Zugang zum Internet und anderen Netzen trotzdem ermöglicht wird.

Das Verfahren in der Veröffentlichung [5] ist damit bei der Datenübertragung begrenzt auf die durch die Mobilfunknetze vorgegebenen Datenraten, was für den mobilen Teilnehmer einen akzeptablen Wert darstellen kann.

In der Veröffentlichung [8] ([9]) werden ein Verfahren und eine Einrichtung beschrieben, die es stationären Teilnehmern ermöglichen, über Funk auf das Internet zuzugreifen. Im spezifischen Airinterface wird als Zugriffsverfahren TDM/TDMA und als Duplexverfahren TDD benutzt. Das Duplexverfahren ist unsymmetrisch ausgestaltet, indem für das Downlink eine vierfach höhere Slotdauer / Datenkapazität als im Uplink bereitgestellt wird. Dies soll dem Fakt Rechnung tragen, daß die von den Teilnehmern verursachte richtungsabhängige Datenlast etwa diesem Verhältnis entsprechen soll. Für die Sprachübertragung auf der Basis von Voice over IP mit 6 kbps oder 16 kbps können schmalbandige Kanäle zugewiesen werden. Hochratige Datenübertragungen bis 248 kbps im Downlink werden durch Mehrkanalzuweisung (Kanalbündelung) realisiert. Datenübertragung und Voice over IP können in diesem Falle simultan erfolgen.

In der Veröffentlichung [10] wird eine Einrichtung beschrieben, die es stationären Teilnehmern ermöglicht, über Funk auf das Internet zuzugreifen. Die Einrichtung beinhaltet zum ersten, daß für das Uplink der Internetverbindung ein bestehendes öffentliches Funknetz, beispielsweise ein GSM-Netz genutzt wird. Der Teilnehmer wählt zum Verbindungsaufbau den Einwahlpunkt seines Internet Serviceproviders an. Die Verbindungsanmeldung und alle weiteren Daten im Uplink werden über dieses Funknetz und über das PSTN zum Einwahlpunkt dieses Internet Serviceproviders geroutet. Die Einrichtung beinhaltet zum zweiten, daß für das Downlink der Internetverbindung ein spezielles breitbandiges Funksystem genutzt wird. Hierzu werden am Einwahlpunkt des Internat Serviceproviders die im Uplink zu übertragenden Daten ausgekoppelt und über eine hochratige Datenverbindung zum Sender des speziellen Funksystems übertragen und von diesem über das Airinterface zum Empfänger am Standort des Teilnehmers übertragen. Der Lösung liegt die Behauptung zu Grunde, daß der Datenverkehr im Uplink im allgemeinen gering im Vergleich zum Datenverkehr im Downlink ist und für den geringen Datenverkehr im Uplink ein Mobilfunkkanal ausreichend sein sollte. Bestandteil der beschriebenen Einrichtung sind die Splitter/Combiner, die den Datenverkehr am Teilnehmerinterface und am Einwahlpunkt des Internet Serviceproviders trennen beziehungsweise zusammenführen und die unterschiedlichen Kanäle für die beiden Übertragungsrichtungen bedienen.

Es zeigt sich, daß der drahtlose Internetzugang bei den bisher existenten oder in Vorbereitung befindlichen Lösungen vorwiegend auf den mobilen Nutzer orientiert ist und meist schmalbandige Übertragungsverfahren, teilweise auch auf Basis der öffentlichen Mobilfunknetze, realisiert werden.

Diese Orientierung führt zu Einschränkungen, die vorwiegend in der Datenübertragungsgeschwindigkeit begründet sind. Verfahren, die mit speziellen breitbandigeren Übertragungsverfahren im Alrinterface arbeiten, gehen meist von der Annahme aus, daß Internetnutzer in der Regel im Uplink wesentlich geringere Datenmengen übertragen als im Downlink, und gestalten entsprechend das Verhältnis der Übertragungskapazität im Uplink und Downlink. Diese Annahme hat eine recht hohe Wahrscheinlichkeit für eine Internetnutzung, die mit dem Begriff Surfen beschrieben ist, oder den mobilen Teilnehmer, der vorwiegend Auskunftsdienste und ähnliches nutzt.

Des weiteren bieten die vorgestellten Einrichtungen mit drahtlosem Internetzugang Sprachverbindungen ausschließlich auf der Basis von Voice over IP. Insbesondere an der Teilnehmerstation ist die Realisierung von Voice over IP vergleichsweise einfacher als die eines Zugangs zum PSTN (Public Switched Telephone Network). Voice over IP hat jedoch entscheidende Nachteile. Dies sind vor allem die nicht garantierte Verbindung, hohe Verzögerungszeiten durch die Paketierung und durch Übergänge an Gateways, zusätzlich zu den durch die immer benutzten Kompressionsverfahren bedingten Verzögerungszeiten, und das Fehlen von Dienstmerkmalen, wie sie beispielsweise in der BRD als Universaldienste in der TKDLV (Telekommunikations-Universaldienstleistungsverordnung) benannt sind und Mindestangebote für Telekommunikationsdienstleistungen darstellen.

Für solche stationären Teilnehmer, für welche der drahtlose Anschluß die Grundversorgung darstellt, sind die oben genannten Einschränkungen nicht akzeptierbar, auch nicht für deutlich niedrige Preise.

In diesem Anwendungsbereich muß mit gewerblicher Nutzung gerechnet werden, die bezüglich der Internetnutzung mehr zu gleichem Datenumfang im Uplink und Downlink tendiert. Des weiteren sind die durch Voice over IP sich ergebenden Einschränkungen nicht akzeptabel und das Fehlen des direkten POTS- oder ISDN-Zugangs mit allen Dienstmerkmalen ein entscheidender Mangel.

Funkkommunikationssysteme, die den neuen Anforderungen gerecht werden, erfordern vor allem, dem Funkteilnehmer den Zugang zu POTS und Internet simultan und unabhängig voneinander zu ermöglichen und für beide Dienste Datenraten und Dienstmerkmale entsprechend den Eigenschaften der Festnetze zu bieten.

In [11] wird diesbezüglich das Konzept eines DECT-basierten WLL-Systems beschrieben, welches sich zur Aufgabe stellt, ein Zugangsnetzwerk zum Internet und ein Zugangsnetzwerk zum PSTN in einem System zu vereinigen. DECT (Digital European Cordless Telephone) ist ein durch das ETSI normiertes System (ETS 300-175) der schnurlosen Telefonie. Es ist bestimmungsgemäß für geringe Reichweiten bis 300 m und Sprachübertragung vorgesehen. DECT hat bereits in der Standardausführung eine geringe Frequenzeffektivität, welche mit 0,226 Bit/s*Hz (Duplexbetrieb) angegeben werden kann. In dieser Ausführung beträgt die laufzeitbedingte Reichweite 5 km. In dem besagten Konzept wird eine Reichweite von 15 km vorgegeben, ohne zu benennen, daß in diesem Falle im Kanalschema nur jeder zweite Slot nutzbar ist, um hinreichende Abstände für den Laufzeitausgleich zu schaffen. Die Frequenzeffektivität verringert sich in diesem Falle auf 0,113 Bit/s*Hz.

Hinzu kommt, daß DECT weder mit einem Fehlerschutzverfahren wie FEC oder anderem noch mit einem Equalizer zur Kompensation von Störungen durch Mehrwegeausbreitung ausgestattet ist. Beide Fakten im Verbund haben zur Folge, daß DECT nur eine BER von 10-3 erreicht, was für die Übertragung von Sprache mittels 32 kbps ADPCM ausreicht, für die Datenübertragung jedoch unzureichend ist. Insbesondere Störungen durch Mehrwegeausbreitung und dadurch entstehende Intersymbol-Interferenzen sind bel Übertragungsstrecken bis 15 km nicht mehr vernachlässigbar. Der Grund ist darin zu sehen, daß bereits eine Umweglänge von 500 m ein Produkt von $\Pi_{DS}$=Symbolrate*Umweglaufzeit =1,5 ergibt, siehe hierzu auch untenstehende Ausführungen.

Im praktischen Einsatz sind unter anderem aus den genannten Gründen bisher alle Versuche, DECT für WLL-Anwendungen mit Reichweiten größer 1 km und für Datenübertragung zu nutzen, problembehaftet gewesen. Diese Nachteile sind nur durch speziell problemangepaßte wie die erfindungsgemäße Lösung zu überwinden. Die nachfolgend beschriebene Erfindung berücksichtigt daher den Einsatz eines FEC zur Fehlersicherung und den Einsatz von Equalizern und Preequalizern, wie unten beschrieben.

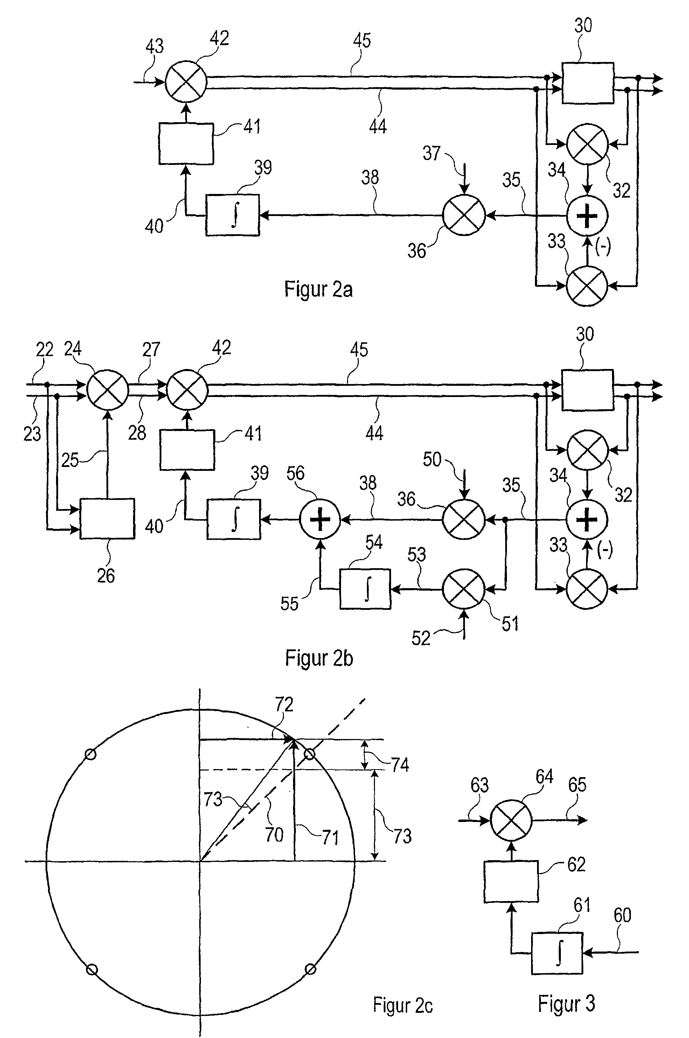

Das in [11] vorgestellte Konzept definiert ein Modell des Internet-Verkehrs mit drei Layern, dem Session Layer, dem Page Layer und dem Packet Layer (siehe [11], 3.5 und 3.6 und Figure 3). Dieses Denkmodell geht davon aus, daß während einer Internetsitzung eine Vielzahl von Seiten übertragen werden und zwischen den Übertragungen der Seiten größere Pausen existieren und daß zur Übertragung einer Seite eine Vielzahl von Paketen erforderlich ist und zwischen den Übertragungen der Pakete ebenfalls Pausen, wenn auch kürzere, auftreten. Entsprechend Konzept erfolgt die Übertragung des Internetverkehrs auf dem Packet Layer, das heißt, daß für jedes Paket eine neue physikalische Verbindung zwischen einer Basisstation und der Teilnehmerstation aufgebaut wird. Dies erfordert ein schnelles Zugriffsverfahren, welches von DECT prinzipiell geboten wird.

Demgegenüber erfolgt, Bezug nehmend auf das obige Denkmodell, bei der erfindungsgemäßen Lösung wie unten beschrieben die Übertragung des Internetverkehrs auf dem Page Layer. Das heißt, daß die kürzeren Pausen zwischen den Paketen überbrückt werden und für diese Zeit die physikalische Verbindung im Airinterface bestehen bleibt und gegebenenfalls nur in ihrer Kapazität reduziert wird, und daß erst für die größeren Pausen zwischen den Pages ein Abbau der physikalischen Verbindung erfolgt.

Das in [11] vorgestellte Konzept geht weiter davon aus, daß lediglich für die Übertragung des Internet-Verkehrs eine Layer 2 Sicherung erfolgt (siehe [11], Seite 8). Da keine Subsegmentierung der IP-Pakete vorgesehen ist, kann die Layer 2 Sicherung nur auf Paketebene wirksam sein. Dies hat erhebliche Nachteile, da bei Paketlängen bis 1500 Byte entsprechend 12.000 Bit bei der oben genannten Fehlerrate die Wahrscheinlichkeit für fehlerhaft übertragene Pakete sehr hoch ist und häufige Wiederholungen der Übertragung von Paketen zu erwarten sind.

Die Überwindung der verschiedenen genannten Nachteile erfordert spezielle Multiplex- und Zugriffsverfahren, welche die erforderliche Breitbandigkeit und Flexibilität gewährleisten. Ein fortgeschrittenes Verfahren ist CDM/CDMA (Code Division Multiplex / Code Division Multiple Access). Code-Multiplex- beziehungsweise -zugriff zeichnet sich vorteilhaft dadurch aus, daß:

- die Nutzer im gleichen Frequenzband arbeiten können,
- eine relativ hohe Störleistung im Band toleriert wird,
- unter bestimmten Bedingungen auch benachbarte Funkzellen die gleiche Frequenz wiederverwenden können.

Im Code-Multiplex bei Überlagerung von mehreren Maximalfolgen im gleichen Frequenzband muß von den Spreizsequenzen gefordert werden, daß sie untereinander gut trennbar sind. Häufig werden dafür sogenannte GOLD-Folgen verwendet, von welchen mehrere Familien bekannt sind und die innerhalb einer Familie niedrige KKF-Werte untereinander für beliebige Codephasen aufweisen. Jedoch sind diese KKF-Werte nicht Null, so daß ein Übersprechen bei der Entspreizung zwischen den einzelnen Folgen auftritt, was den Multiplexbetrieb auf vergleichsweise wenige der besagten Folgen beschränkt.

Für Code-Multiplex mit der nachrichtentheoretisch maximal möglichen Übertragungskapazität muß man orthogonale Signalräume nutzen. Walsh-Hadamard-Sequenzen sind zum Beispiel derartige orthogonale Codesequenzen. Die Orthogonalität beschränkt sich aber auf eine Vorzugs-Codephase, so daß zur Ausnutzung der Orthogonalität alle Sequenzen codephasensynchron in einem Empfänger eintreffen und eine synchrone Demodulation vorgenommen werden müssen.

In [12] wird diesbezüglich ein Verfahren benannt, welches beinhaltet, daß im Downlink zu Beginn jedes Frame 3 Referenzsymbole in einem der Codekanäle gesendet werden, die mit der kanalspezifischen Codesequenz gespreizt sind. In allen anderen Codekanälen erfolgt zu diesem Zeitpunkt keine Aussendung. Diese Aussendung wird von allen Teilnehmerstationen, unabhängig davon, welcher Codekanal ihnen für die Nutzdatenübertragung zugewiesen ist, für die Synchronisation benutzt.

Vordergründig werden in [12] die Referenzsymbole jedoch für die Messungen zum Antennendiversity und zur Bestimmung der TX Leistungseinstellung benutzt. Durch den Umschaltvorgang der Antennendiversityeinrichtung während des zweiten Referenzsymbols steht dieses für die Synchronisation auch nicht zur Verfügung. In [12] wird des Weiteren im Uplink zu Beginn jedes Frame in allen Codekanälen ein Referenzsymbol gesendet, welches mit der für den jeweiligen Codekanal gültigen Codesequenz gespreizt ist und von der Basisstation zur Synchronisation im jeweiligen Codekanal benutzt wird.

In [13] werden im Downlink am Anfang jedes Timeslots Präambelsymbole gesendet, die in allen Codekanälen identisch sind und deren Spreizungssequenz zu den Codesequenzen der Nutzdaten unterschiedlich ist. Diese Präambelsendungen haben den Vorteil der leistungsmäßigen Addition, die sich in einer Erhöhung des S/N-Verhältnisses und damit der exakteren Bestimmung eines Triggersignals, welches der Synchronisation dient, auswirkt. Zur weiteren Erhöhung der Genauigkeit erfolgt eine zeitliche Mittelung über die Synchroninformationen.

In [13] werden des Weiteren auch im Uplink Präambelsymbole gesendet, deren Spreizungssequenz zu den Codesequenzen der Nutzdaten unterschiedlich ist. Die Aussendung erfolgt jeweils exclusiv durch eine Teilnehmerstation und die Berechtigung zur Aussendung wird von der Basisstation in einem Pollingverfahren an die Teilnehmerstationen zyklisch vergeben, wozu spezielle Messages in einem zentralen Dienstkanal übertragen werden. Die exclusive Übertragung, die nicht durch andere Aussendungen überlagert ist, erhöht die Genauigkeit der daraus abgeleiteten Synchroninformationen.

In [14] wird im Uplink für den Random Access Channel ein fortgeschrittenes Verfahren verwendet, bei welchem Access Probes, mit welchen Teilnehmer einen Zugriffswunsch anmelden, aus drei Teilen bestehen und eine Länge von mehreren Timeslots umfassen können. Ein erster Teil ist eine Präambel, die nur mit einer kurzen PN-Folge gespreizt ist. Bedingung für die Funktion des Systems ist, daß die ersten Teile von Access Probes verschiedener Teilnehmer innerhalb eines Timeslots nicht kollidieren dürfen. Ist dies gewährleistet, so erfolgt die Zuweisung eines Despreaders und dessen Synchronisation auf die kurze PN-Folge. Ein zweiter Teil ist eine Präambel, die sowohl mit der kurzen als auch mit einer zweiten langen PN-Folge gespreizt ist. Bedingung für die Funktion des Systems ist, daß diese zweiten Teile von Access Probes verschiedener Teilnehmer ebenfalls nicht kollidieren dürfen, was jedoch automatisch gewährleistet ist, wenn bereits beim ersten Teil keine Kollision vorlag. Ist dies der Fall, so erfolgt die Zuweisung eines dem ersten Despreader nachgeschalteten zweiten Despreader für die lange PN-Folge und dessen Synchronisation auf diese PN-Folge. Der dritte Teil ist die eigentliche Message, die ebenfalls mit der kurzen als auch mit der zweiten langen PN-Folge gespreizt ist.

Messages mehrerer Teilnehmer dürfen sich im Rahmen bestimmter Bedingungen, die sich aus den Eigenschaften der PN-Folgen ergeben, überlagern.

Der Gewinn des Verfahrens besteht darin, daß pro Timeslot, ausgenommen Kollisionsfälle, jeweils ein neuer Zugriff gestartet werden kann, die dabei zu übertragenden Messages jedoch die Slotdauer wesentlich übersteigen können. Die maximale Anzahl sich derart überlagernder Access Probes wird dabei durch die Eigenschaften der verwendeten PN-Folgen bestimmt.

Ein weiterer Gesichtspunkt, der für die Anwendung von CDMA spricht, ist, daß reine TDMA-Verfahren generell das Problem haben, daß auf Grund der zeitsequentiellen Übertragung die Symbolrate hohe Werte annimmt und das Produkt $\Pi_{DS}$=Symbolrate*Umweglaufzeit Werte >> 1 annimmt, das heißt, daß die Umwegsignale eines Symbols $A_n$ als Intersymbol Interferenzen der Signale $A_{n+k}$, k=1 ... $\Pi_{DS}$ in Erscheinung treten. TDMA-Verfahren weisen damit bezüglich Mehrwegeausbreitungen eine hohe Empfindlichkeit auf.

CDMA-Verfahren besitzen diesbezüglich günstigere Voraussetzungen als TDMA-Verfahren, da bei gleicher zu übertragender Datenmenge CDMA-Verfahren diese Datenmenge in S überlagerten Kanälen übertragen, wobei S die Anzahl der verwendeten Codesequenzen ist. Damit reduziert sich die Symbolrate gegenüber TDMA-Verfahren um diesen Faktor S. So ergibt sich in einem Beispiel bei S=32 und einer Symbolrate von 120 kSymbolen/s und einer angenommenen maximalen Umweglänge von 2,5 km, was einer Umweglaufzeit von 8,3 µs entspricht, ein Produkt $\Pi_{DS}$=Symbolrate*Umweglaufzeit= 1. Für ein TDMA-Verfahren gleicher Kapazität würde sich $\Pi_{DS}$=32 ergeben.

Des weiteren müssen bei TDMA im Multiuserbetrieb die Schutzzeiten für den Laufzeitausgleich zeitsequentiell in die Übertragung in der Richtung von den Teilnehmerstationen zur Basisstation eingefügt werden, was die Effektivität der Datenübertragung verringert.

Diesbezüglich ist eine Verbindung von CDMA mit einem eingebetteten TDMA vorteilhaft, da sich die Anzahl der zeitsequentiell in die Übertragung einzufügenden Schutzzeiten für den Laufzeitausgleich entsprechend der Anzahl der Codekanäle S um diesen Faktor verringert. Gleichzeitig wird die Anzahl der parallel verfügbaren Kanäle, die bei reinem CDMA auf S begrenzt ist, erhöht.

Der vorliegenden Erfindung liegt die Aufgabe zu Grunde, die Nachteile der vorgenannten Einrichtungen und Verfahren zu überwinden. Die Aufgabe wird durch ein Verfahren entsprechend den Merkmalen des Anspruchs 1 gelöst.

Das Funkkommunikationssystem umfaßt zur Realisierung dieser Aufgabe eine Basisstation, eine Vielzahl von Teilnehmerstationen, eine Ortsvermittlungseinrichtung des PSTN und das PSTN, optionale Anschalteinrichtungen, einen ersten Router, einen Zugangspunkt eines ISP (Internet Service Provider) und das Internet, eine lokale OA&M-Einrichtung, ein OA&M-Center und einen zweiten Router/Proxyserver.

Die Basisstation ist

- über ein Airinterface mit der Vielzahl der Teilnehmerstationen verbunden,
- über eine oder mehrere E1- oder T1-PCM Verbindungen, ggf. unter Zwischenschaltung der optlonalen Anschalteinrichtungen, mit der Ortsvermittlungseinrichtung des PSTN und
- über ein Ethernet mit dem Router 1 und der lokalen OA&M-Einrichtung verbunden.

Der erste Router ist über eine Datenverbindung mit dem Zugangspunkt des ISP verbunden.

Das OA&M-Center ist über den zweiten Router/Proxyserver mit dem Internet verbunden, wobei diese Verbindung ebenfalls über einen ISP, der mit dem erstgenannten nicht identisch sein muß, erfolgt. Das OA&M-Center ist gegebenenfalls für eine Mehrzahl derartiger erfindungsgemäßer Einrichtungen vorgehalten.

Die Teilnehmerstationen besitzen jeweils

- ein PSTN-Teilnehmerinterface, welches für POTS (Plain Old Telefone Service, a/b) oder ISDN (Basisanschluß, 2B+D) ausgelegt ist, und
- ein Ethernet-Interface, welches erfindungsgemäß für den Internetzugang bestimmt ist.

Ein weiterer Aspekt der Erfindung besteht darin, daß in diesem Funkkommunikationssystem ein drahtloses Zugangsnetzwerk zum PSTN und ein drahtloses Zugangsnetzwerk zum Internet vereinigt werden.

Ein weiterer Aspekt der Erfindung besteht darin, daß im Airinterface das besonders störsichere Multiplex/ Zugriffsverfahren DS CDM/CDMA (Direct Sequenz Code Division Multiplex / Code Division Multiple Access, im weiteren immer als CDMA bezeichnet) benutzt wird. Das CDMA-Verfahren beinhaltet, daß Codesequenzen mit einer einheitlichen Länge von n Bit definiert werden, die zueinander orthogonal sind. Die Orthogonalität dieser Codesequenzen beinhaltet, daß bei Sequenzsynchronität ihre Kreuzkorrelationsfunktionen den Wert Null ergeben. Bei einer Sequenzlänge von n Bit können maximal genau n Sequenzen gefunden werden, die diese Bedingung erfüllen. Es können mehrere Sequenzfamilien gefunden werden, die innerhalb der Familie die Bedingung der Orthogonalität erfüllen.

Zwischen den Mitgliedern der verschiedenen Sequenzfamifien ist diese Bedingung definitiv nicht erfüllt. Die Anwendung des Verfahrens ermöglicht, daß mehrere parallele Datenströme, maximal bis zu n Stück entsprechend der Anzahl der Codesequenzen, parallel über einen gemeinsamen physikalischen Kanal übertragen und empfangsseitig wieder getrennt werden können. Hierzu werden die Datenströme beim Multiplexen bit- oder symbolsynchron an die maximal bis zu n Modulatoren entsprechend der Anzahl der Codesequenzen übergeben. Die Forderung der Synchronität ergibt sich aus der bereits genannten Eigenschaft der Codesequenzen, daß nur in diesem Falle deren Kreuzkorrelationsfunktionen den Wert Null haben, was Voraussetzung für die empfangsseitige Trennbarkeit ist. Die Modulatoren führen die Spreizung jedes Bits oder Symbols des einzelnen Datenstromes mit der ihnen zugewiesenen Codesequenz aus dem Vorrat der Codesequenzen durch, die mathematisch betrachtet einer Multiplikation des Bits oder Symbols mit der Codesequenz entspricht. Damit wird jedes Bit oder Symbol in eine Anzahl von n Zuständen umgesetzt, die zur Unterscheidung als "Chip" bezeichnet werden. Die am Ausgang der Modulatoren zur Übertragung anstehende Chiprate ist somit um den Faktor n höher als die eingangsseitige Bit- oder Symbolrate. Die so gespreizten Datenströme stellen unabhänge Kanäle dar, die durch ihre Codesequenz gekennzeichnet sind und deshalb als Codekanal bezeichnet werden. Diese Codekanäle werden danach additiv überlagert und für die Übertragung auf einen HF-Träger moduliert.

Wenn CDMA auch für "Multiple Access" eingesetzt wird, das heißt, daß eine Vielzahl von unabhängigen Quellen zu einem gemeinsamen Empfänger senden, muß am Empfängereingang für die Signale aller Quellen

- die Synchronität der Codesequenzen aller Codekanäle gewährleistet werden. Dies wird erfindungsgemäß durch eine Startup-Synchronisation und eine Synchronisation während des laufenden Betriebes gesichert, die unten beschrieben werden.
- der gleiche Empfangspegel der Codesequenzen aller Codekanäle gewährleistet werden. Dies wird erfindungsgemäß durch ein Powercontrol während des laufenden Betriebes gesichert, welches unten beschrieben wird.

Empfangsseitig ist ein HF-Empfänger angeordnet, weicher an seinem Ausgang ein demoduliertes Signal bereitstellt, welches die Überlagerung der Signale aller Code kanäle darstellt. Für jeden Codekanal ist ein Demodulator erforderlich, welcher die zu selektierende Codesequenz a priori kennen muß und eine Korrelation von Codesequenz und Eingangssignal durchführt. Korrelatoren oder Matched Filter, die hierfür benutzt werden, sind als in speziellen Schaltkreisen integrierte Hardwarelösungen erhältlich oder werden in Signalprozessoren softwaremäßig realisiert. Letzteres bietet sich an, da die Korrelation mathematisch betrachtet wieder eine Multiplikation des Eingangsdatenstromes mit der Codesequenz darstellt. Das Ausgangssignal des Korrelators muß anschließend noch bewertet werden, im einfachsten Falle in einer Schwellenwertschaltung, um den Dateninhalt des Codekanals wieder zu gewinnen.

Ein weiterer Aspekt der Erfindung besteht darin, daß als Duplexverfahren TDD (Time Division Duplex) benutzt wird, d.h. es wird zeitlich alternierend ein HF-Kanal für beide Übertragungsrichtungen genutzt. Dies ermöglicht, daß Sender und Empfänger der Einrichtungen auf eine gemeinsame Antenne arbeiten und zur Entkopplung von Senderausgang und Empfängereingang nur ein elektronischer Antennenumschalter benutzt wird und keine aufwendigen und teueren Duplexfilter wie bei FDD (Frequency Division Duplex) erforderlich sind. In der erfindungsgemäßen Einrichtung bilden eine Downlinkperiode, eine Schutzzeit und eine Uplinkperiode einen Duplexframe, im weiteren stets als Frame bezeichnet.

Ein weiterer Aspekt der Erfindung besteht darin, daß der Frame im TDM/TDMA genutzt wird und in einer beispielhaften Ausführung in 15 Timeslots gleicher Dauer, im weiteren als Slots bezeichnet, unterteilt ist. Die Zuordnung der Slots ist für alle Codekanäle identisch wie nachstehend beschrieben:

- Slot 0 bis 6 werden für die Aussendungen der Basisstation genutzt,
- Slot 7 ist zweigeteilt und beinhaltet eine Schutzzeit für den Laufzeitausgleich und eine Zeitphase für Anmeldung von Verbindungsanforderungen und die Startup Synchronisation für Teilnehmerstationen, die zeitweilig inaktiv waren. Die Schutzzeit für den Laufzeitausgleich berücksichtigt die maximale Entfernung, die zwischen der Basisstation und einer Teilnehmerstation zugelassen ist und hat eine Dauer der zweifachen Laufzeit für diese Entfernung inclusive die realen Umschaltzeiten von Empfangen auf Senden in der Teilnehmerstation. Die Anmelde- und Synchronisationsprozeduren werden unten beschrieben.
- Slot 8 bis 14 werden für die Aussendungen der Teilnehmerstationen genutzt.

Im Detail befaßt sich die Erfindung mit Verfahren der Synchronisation, umfassend die Frequenz-, Trägerphasen-, Codephasen- und Framesynchronisation, die in dem vorstehend beschriebenen System, welches mit CDM/CDMA und einem eingebetteten TDM/TDMA und TDD und QPSK als Modulationsverfahren arbeitet, erforderlich sind. Insbesondere sind solche Lösungen geschaffen, die eine zuverlässige und schnelle Funktion gewährleisten und mit einem geringen Overhead auskommen. Dies erfolgt dadurch, daß im Airinterface des besagten Kommunikationssystems die durch das TDM/TDMA in den Codekanälen gebildeten Slots mit Präambelsymbolen eingeleitet werden, welche mit Codesequenzen gespreizt sind, die nicht mit den Codesequenzen für die nachfolgend zu übertragenden Daten übereinstimmen und deren Umsetzung in die I- und Q-Zweige mit der Trägerbezugsphase Null erfolgt, und

- in der Downlinkrichtung besagte Präambelsymbole und die für deren Spreizung verwendete Codesequenz in allen Codekanälen identisch sind und durch die additive Überlagerung aller Präambeln diese in den Teilnehmerstationen mit einer Symbolenergie eintreffen, die die Symbolenergie der Datensymbole des einzelnen Codekanals übertrifft, entsprechend dadurch auch ein günstiges Signal/Stör-Verhältnis besitzen und dadurch besonders genaue Messungen gewährleisten.
- im Accesskanal RACH besagte Präambelsymbole mindestens zwei Präambelsymbole, welche mit einer Codesequenz erster Form gespreizt sind und weiche Codesequenz gegenüber den Codesequenzen für die nachfolgend zu übertragenden Daten verkürzt ist, und mindestens ein Präambelsymbol, welches mit einer Codesequenz zweiter Form gespreizt ist und welche Codesequenz gegenüber den Codesequenzen für die nachfolgend zu übertragenden Daten verlängert ist, umfassen. Die mit der Codesequenz erster Form gespreizten Präambelsymbole ermöglichen im Falle des Random-Access durch eine Teilnehmerstation eine schnelle und sichere Erkennung dieses Zugriffs, die mit der Codesequenz zweiter Form gespreizten Präambelsymbole ermöglichen auf Grund der größeren Länge der Codesequenz und des dadurch bedingten höheren Prozeßgewinns eine Erhöhung der Genauigkeit der Messung des Abtastzeitpunktes für die Auswertung der nachfolgenden Datensendung und des Delaywertes, der bestimmt, um welchen Betrag die Teilnehmerstation ihre Aussendung zu verschieben hat, um codesynchron und slotsynchron in der Basisstation empfangen zu werden. Durch eine gesonderte Auswerteeinrichtung für die mit den Codesequenzen erster Form gespreizten Präambeln wird während des gesamten Empfangszeitraumes des RACH überwacht, ob ein überlagerter, gegebenenfalls zeitlich versetzter, Random-Access durch eine andere Teilnehmerstation erfolgt, um in diesem Falle auf Grund der Gefahr von Fehlinterpretationen den Zugriff für beide Teilnehmerstationen zurückzuweisen.
- in der Uplinkrichtung besagte Präambelsymbole jeweils nur in einem ausgewählten Timeslots in einem der Codekanäle durch jeweils diejenige Teilnehmerstation, welcher der besagte Timeslot in dem bestimmten Codekanal zur Nutzung zugewiesen ist, gesendet werden, und die Berechtigung zur Aussendung besagter Präambeln in einem Multiframe in einem zyklischen Verfahren jedem Slot jedes Codekanals mindestens einmal zugewiesen wird, und jeweils alle anderen Teilnehmerstationen den Slot mit einer aussendungsfreien Schutzzeit einleiten. Das zyklische Verfahren der Verteilung dieser Berechtigung zur Präambelsendung erfolgt derart, daß nach jedem Slot die Berechtigung in den nachfolgenden Slot eines anderen Codekanals vergeben wird. Damit wird erst nach Durchlauf über alle Codekanäle im ersten Codekanal wieder einem Slot die Berechtigung zugewiesen. Diese Art der Verteilung hat den Vorteil, daß eine Verbindung, die mehrere oder alle Slots eines Codekanals belegt, die mehrfache Zuweisung innerhalb eines besagten Multiframes gleichmäßig verteilt über den Gesamtbereich des Multiframes erhält.

Zusätzlich zu besagten Präambelsymbolen und an diese anschließend können in besonderen Ausführungen der Erfindung in den Codekanälen optional Referenzsymbole gesendet werden, beziehungsweise werden derartige Referenzsymbole in der Uplinkrichtung generell gesendet, da hier Präambelsymbole nicht durchgängig in jedem Slot zur Verfügung stehen. Besagte Referenzsymbole sind mit der Codesequenz des jeweiligen Codekanals gespreizt und werden wie die Präambelsymbole mit der Trägerbezugsphase Null gesendet. Die Nutzung erfolgt auf der jeweiligen Empfangsseite zur Bestimmung der Referenzphase für die kohärente Demodulation der im jeweiligen Slot nachfolgenden Datensendung und ergibt eine Bestimmung der Referenzphase mit einer verbesserten Genauigkeit in Relation zur gleichen Messung an Hand der Präambelsymbole, da auf der gleichen Codesequenz wie die nachfolgenden Daten beruhend.

Besagte Referenzphase wird in einer Einrichtung zur entscheidungsrückgekoppelten Trägerregelung für die kontinuierliche Nachführung der Trägerphase als Ausgangswert benutzt. Die verwendete Einrichtung basiert auf dem bekannten Verfahren der entscheidungsrückgekoppelten Trägerregelung erster Ordnung, enthält aber zusätzlich zur linearen Rückkopplung der Phasendifferenz einen parallelen integrierenden Rückkopplungsweg. Durch unterschiedliche einstellbare Rückkopplungsfaktoren in beiden Rückkopplungswegen kann erreicht werden, daß der integrierenden Rückkopplungsweg den Ausgleich einer konstanten Frequenzablage des Empfangssystems realisiert, während der lineare Rückkopplungsweg die Kompensation von stochastischen Phasenänderungen bewirkt.

Diese Lösung ermöglicht, die in einer Teilnehmerstation im integrierenden Rückkopplungsweg ermittelte Stellgröße für eine Phasenvorverzerrung der Aussendungen der jeweiligen Teilnehmerstation zu benutzen. Im Ergebnis wird dadurch erreicht, daß die in der Basisstation eintreffenden Sendungen einer Vielzahl von Teilnehmerstationen eine verbesserte Frequenz- und Phasenübereinstimmung besitzen, welches für die Demodulation bei CDMA eine Verringerung der Multiuser-Interferenz ergibt.

Ein Ausführungsbeispiel der Erfindung wird an Hand der beigefügten Zeichnungen näher erläutert. Es zeigen:

Figur 1    die Architektur des Funkkommunikationssystems in seiner Gesamtheit.

Figur 2a   eine Einrichtung zur entscheidungsrückgekoppelten Trägerregelung erster Ordnung entsprechend Stand der Technik.

Figur 2b   eine Einrichtung zur entscheidungsrückgekoppelten Trägerregelung.

Figur 3    eine Einrichtung zur Phasenvorverzerrung der Sendungen der Teilnehmerstationen.

Figur 4    das Kanalschema einer konkreten Ausführung bei Nutzung von CDMA in Verbindung mit TDM/TDMA und TDD.

Figur 5    die Struktur eines Multiframe_6 (MP_6) für einen Codekanal, basierend auf einem Kanalschema entsprechend Figur 4.

Figur 6    die Einordnung der speziellen Kanäle für Synchronisation und Steuerung sowie der Schutzzelt für den Laufzeitausgleich in das TDD und das Kanalschema entsprechend Figur 4.

Figur 7    die unterschiedlichen Strukturen von Slottypen.und ihre Verwendung im Kanalschema entsprechend Figur 4.

Figur 8    die Struktur und Funktion eines Multiframe_32 (MF_32) für eine Ausführung der Erfindung mit n=32 Codekanälen.

Figur 9    eine detailliertere Darstellung eines Ausschnittes aus Figur 8.

Sowohl die vorausgehenden allgemeinen Beschreibungen als auch die folgende detaillierte Beschreibung besitzen nur Beispielcharakter als mögliche Ausführungen des erfindungsgemäßen Verfahrens und schränken die Ansprüche zur Erfindung nicht ein.

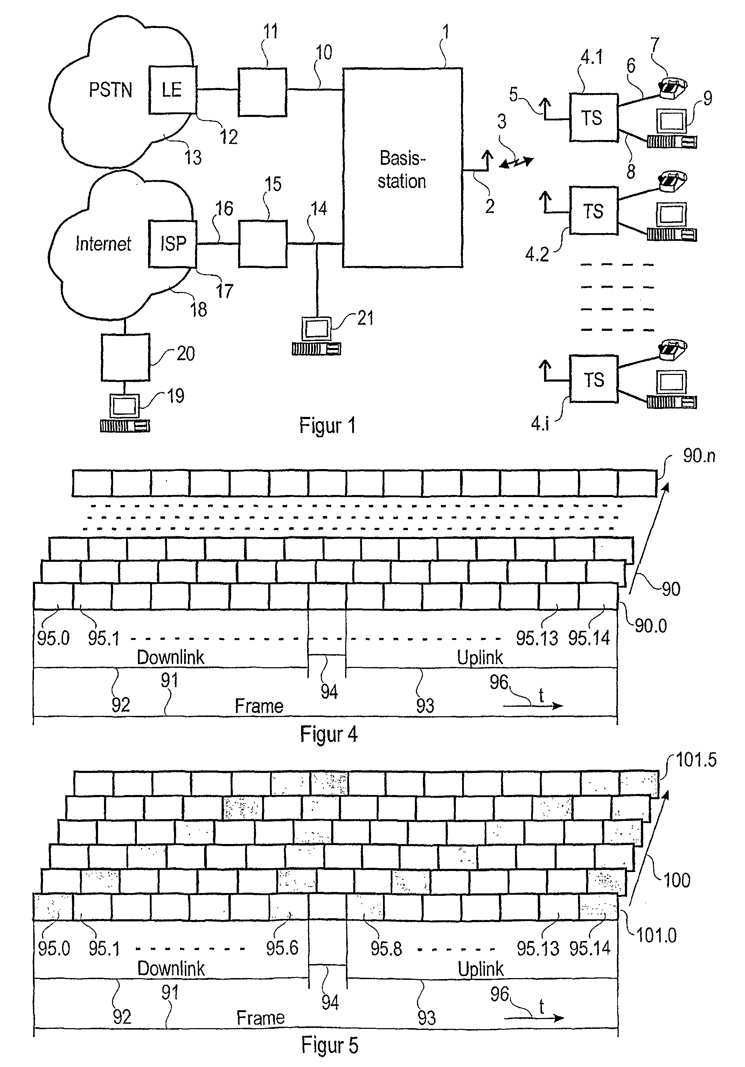

Figur 1 beschreibt die Architektur einer Einrichtung zur Umsetzung des erfindungsgemäßen Verfahrens. Eine Basisstation 1 besitzt eine Schnittstelle zum Airinterface 3 für die drahtlose Verbindung zu einer Vielzahl von Teilnehmerstationen 4.1 bis 4.i. Der Zugang zum Airinterface 3 erfolgt über eine Antenne 2, die gleichermaßen für den Sende- als auch den Empfangsbetrieb genutzt wird.

Die Basisstation 1 besitzt des weiteren eine PCM-Schnittstelle 10, die als eine oder mehrere E1- oder T1-PCM Trunklines ausgeführt ist und die die Basisstation 1 mit einer Ortsvermittlungseinrichtung 12 des PSTN 13 verbindet. Die Schnittstelle 10 ist als konzentriertes Interface ausgeführt, das heißt, daß die Anzahl der PCM-Verbindungen der Anzahl der möglichen Verbindungen im Airinterface entspricht oder diese nur soweit übersteigt, wie es sich durch die Quantelung der E1- oder T1-PCM Trunklines ergibt. Bei Bedarf werden optionale Anschalteinrichtungen 11 in die Verbindung zwischen der Basisstation 1 und der Ortsvermittlungseinrichtung 12 eingeschaltet, wenn die Ortsvermittlungseinrichtung 12 ein konzentriertes Interface nicht unterstützt, sondern nur teilnehmerbezogene Verbindungen wie TIP/RING (a/b) oder V5.1 bietet. In diesem Falle haben die Anschafteinrichtungen 11 die Aufgabe der physikalischen Anpassung, der Protokollumsetzung und Umsetzung von teilnehmerbezogenen auf konzentrierte Verbindungen. Ein weiterer Grund für den Einsatz der Anschalteinrichtungen 11 kann sein, wenn von der Ortsvermittlungseinrichtung 12 ein Protokoll geboten wird, welches von der Basisstation 1 nicht unterstützt wird

Die Basisstation 1 besitzt des weiteren eine Schnittstelle 14, welche als eine Ethernetschnittstelle ausgeführt ist. An das Ethernet ist ein Router oder Proxyserver 15 angeschlossen, der über eine Datenleitung 16 mit einem Netzzugang eines ISP 17 (Internet Service Provider) verbunden ist, über welchen ein Zugang zum Internet 18 besteht. An das Ethernet ist des weiteren eine lokale OA&M-Einrichtung 21 angeschlossen. Bestandteil der Einrichtung ist weiterhin ein OA&M-Center 19, welches über einen Router/ Proxyserver 20 mit dem Internet 18 (über einen hier nicht dargestellten ISP, der mit dem erstgenannten nicht identisch sein muß) verbunden ist. Das OA&M-Center 19 ist gegebenenfalls für eine Mehrzahl von entfernten Basisstationen 1 vorgehalten.

Die Teilnehmerstationen 4 besitzen eine Schnittstelle zum Airinterface 3 für die drahtlose Verbindung zur Basisstation 1. Der Zugang zum Airinterface 3 erfolgt über eine Antenne 5, die gleichermaßen für den Sende- als auch den Empfangsbetrieb genutzt wird. Des weiteren besitzen die Teilnehmerstationen 4 jeweils ein PSTN-Teilnehmerinterface 6, welches für POTS (TIP/RING, a/b) oder ISDN (Basisanschluß, 2B+D) ausgelegt ist, und ein Ethernet-Interface 8, welches erfindungsgemäß für den Internetzugang bestimmt ist. Das PSTN-Teilnehmerinterface 6 erlaubt den Anschluß von Endgeräten 7 dem Diensttyp entsprechend und nach Wahl des Kunden. Das Ethernet-Interface 8 erlaubt den Anschluß von Rechnern 9 für den direkten Zugang zum Internet, wobei es sich um Einzelrechner oder bei Rechnernetzen um Router, Proxyserver oder Rechner mit einer Proxyserver-Emulation handeln kann.

In Figur 2a ist eine Einrichtung zur entscheidungsrückgekoppelten Trägerregelung erster Ordnung dargestellt, wie sie auch in [2] beschrieben wird. Diese Einrichtung stellt eine der Möglichkeiten dar, um bei mehrwertigen Modulationen eine kohärente Demodulation durchzuführen. Die unten beschriebene erfindungsgemäße Lösung geht von diesem Grundaufbau aus und entwickelt diesen weiter. Das komplexe Eingangssignal 43 durchläuft einen Multiplizierer 42, in welchem es mit der rückgekoppelten Korrekturphase $\Theta$ multipliziert wird. Die Signale I($\Theta$) 44 und Q($\ominus$) 45 werden einem Entscheider 30 zugeführt, welcher an seinem Ausgang die I- und Q-Werte der entschiedenen Symbole ausgibt. In den Multiplizierern 32 und 33 werden die Produkte $\Pi(32) = Sig(I)*Q$ und $\Pi(33) = Sig(Q)*I$ gebildet. Die aktuelle Phasendifferenz $\Delta\varphi$ 35 wird in dem Addierer 34 als $\Delta\varphi = Sig(I)*Q - Sig(Q)*I$ berechnet. in dem Multiplizierer 37 erfolgt eine Wichtung mit einem Rückkopplungsfaktor k 37, welcher mit dem Betrag des Datensignals über die Beziehung k $= c/|d|$ verknüpft ist, um die Abhängigkeit des $\Delta\varphi$ vom Betrag des Datensignals zu eliminieren, eine Maßnahme, die insbesondere dann wichtig ist, wenn es sich um die Demodulation von QAM-Signalen handelt. Das Ausgangssignal des Multiplizierers 37 wird einer integrierenden Einrichtung zugeführt. Das Ausgangssignal der besagten integrierenden Einrichtung ist eine akkumulierte Phase $\ominus$ und wird einer Einrichtung 41 zugeführt, welche die Wandlung in einen komplexen Wert durchführt. Besagter komplexer Wert wird mit dem Eingangssignal 43 in dem Multiplizierer 42 multipliziert. Ergebnis sind die phasenkorrigierten Signale I($\ominus$) 44 und Q($\ominus$) 45.

Figur 2b zeigt die eine Einrichtung zur Umsetzung des erfindungsgemäßen Verfahrens zur Trägerregelung in den Empfangszweigen der Teilnehmerstationen und der Basisstation. Die Einrichtung nach Figur 2b ist erfindungsgemäß gegenüber der Einrichtung nach Figur 2a erweitert um eine Einrichtung zur Bestimmung der Referenzphase und der Korrektur der Empfangsdaten unter Beachtung der Referenzphase, sowie eine Einrichtung für eine spezielle Form der entscheidungsrückgekoppelten Trägerregelung.

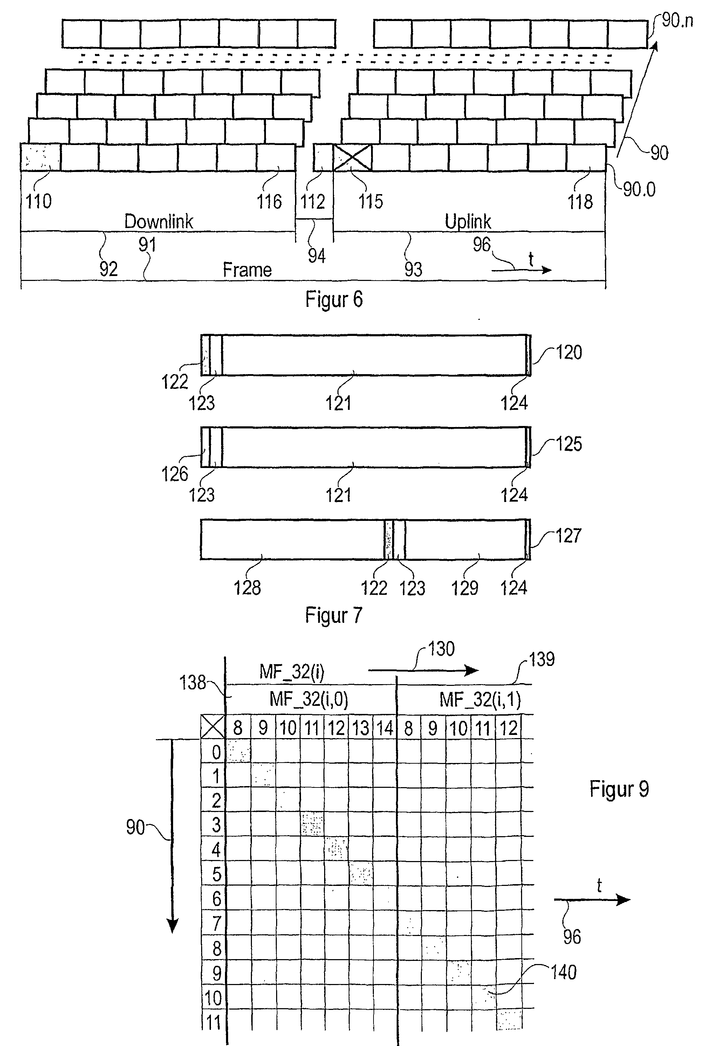

Die Einrichtung setzt für ihre Funktion voraus, daß eine Erstsynchronisation entsprechend den Verfahrensschritten in Anspruch 2 erfolgt ist. Diese wird nachstehend beschrieben, wobei bereits eine Bezugnahme auf Strukturen und Verfahren erfolgt, die in und zu den Figuren 4 ff beschrieben sind.

Der erste Verfahrensschritt zur Identifizierung der Basisstation ist trivial und wird durch die Feststellung einer Präambelsendung 122 (Figur 7), die mit einer a priori bekannten Präambelsequenz gespreizt ist, realisiert.

Der zweite Verfahrensschritt beinhaltet, die Chipposition eines größten Präambelkorrelationswertes zu bestimmen und zu prüfen, ob dieser Wert einen Schwellenwert überschreitet, wobei in der nachfolgenden Verfahrensbeschreibung von einem Beobachtungszeitraum mit der Dauer eines Frames 91 (Figur 4) und einer Sequenzlänge der Präambeln 122 (Figur 7) von 31 Chip ausgegangen wird.

```
Start 2. Verfahrensschritt

    Korr_Max:=0

    for n:=0 to M do                          (M:=Anzahl der Chips per Frame 91)

    begin                                      (n:=Chiptakt)           (Bemerkung 2.1)

        Korrelation über Abtastwerte a(n)...a(n-30)   (Korrelation in I- und Q-Empfangszweig)

        SP(n):=I*I+Q*Q                         (Bestimmung der Signalenergie)

        If SP(n)>Korr_Max then                 (Bestimmung der maximalen Prä-)

            Korr_Max:=SP(n)                    (ambelamplitude in einem Frame)

            Pos_Max(0):=n                      (Bestimmung der Position des Korr_Max)

    end

    if Korr_Max<C then                         (Prüfung auf Überschreitung des)

        Start 2. Verfahrensschritt             (Schwellenwertes C)

End 2. Verfahrensschritt
```

(Bemerkung 2.1: Abtastrate und Lage des Abtastzeitpunktes beziehen sich auf die nicht erfindungsrelevante und daher nicht dargestellte Funktion der A/D-Wandler in den I- und Q-Zweigen des Empfangsweges, welche das analoge Ausgangssignal eines RF-Demodulators digitalisieren und der Recheneinheit auf der Basis eines DSP (Digitaler Signalprozessor) übergeben, welche die beschriebenen Programmfunktionen zur Realisierung der Verfahrensschritte abarbeitet. Da der LO (Local Oszillator) mit zum Beispiel dem achtfachen der Chiprate arbeitet, kann mit einem maximal achtfachen Oversampling gearbeitet werden beziehungsweise der Abtastzeitpunkt bei chipsynchronem Abtasttakt mit einer Auflösung von 0,125 Chipdauern eingestellt werden.)

Im 3. Verfahrensschritt wird die Frequenzablage der jeweiligen Teilnehmerstation 4 zur Basisstation 1 bestimmt, indem unter Verwendung eines Oversamplings mit einer höheren Auflösung als der reguläre Abtasttakt zwei Gruppen von Korrelationswerten gemessen und die Lage des Korrelationsmaximums in den besagten Gruppen bestimmt wird und die Drift der Lage der Korrelationsmaxima in Relation zum regulären Abtasttakt bestimmt wird und aus der besagten Drift die Frequenzablage bestimmt und eine erste dedizierte Nachstellung der Frequenz vorgenommen wird, wobei nachfolgend von einem Oversamplingfaktor 2 und 5 Abtastwerten pro Gruppe ausgegangen wird.

```
Start 3. Verfahrensschritt

    for z:=1 to 2                              (z für 2 Gruppen von Korrelationswerten)

    begin

        n:=Pos_Max(0)+z*M                      (Gruppenabstand 1 bzw. 2 Frames)

        for p:=-2 to 2                         (bezogen auf Pos_Max(0))

        begin                                  (p:= 5 Abtastwerte pro Gruppe)

            Korrelation über Abtastwerte a(n+p/2)...a(n-30+p/2)

        SP(p):=I*I+Q*Q                         (p:= 0,5*n für Oversamplingfaktor 2)

            if SP(p)>C then                    (mindestens eine Schwellenwertüber-)

                T(z):=1                        (schreitung pro Gruppe)

        end

        Pos_Max(z):=(SP(-2)+SP(-1)-SP(1)-SP(2))/Σ(SP(p))   (Mittelung für Korrelationsmaximum)

    end                                        (der jeweiligen Gruppe)

    if NOT(T(1)) OR NOT(T(2)) then

        Start 2. Verfahrensschritt

    Δ_Freq:=(Pos_Max(2)-Pos_Max(1))/2          (Frequenzablage in Chips per Frame)

    Set LO                                     (LO:= Local Oszillator)

End 3. Verfahrensschritt
```

Der 4. Verfahrensschritt beinhaltet die Nachkorrektur des chipsynchronen Abtastzeitpunktes und den Übergang zur automatischen und zunächst breitbandigen Frequenznachführung.

```
Start 4. Verfahrensschritt
    Pos_Max(0):=Pos_Max(0)+(Pos_Max(2)/2)          (Setzen des Abtastzeitpunktes)
    Start automatische Frequenz-/Phasenregelung / grob      (mit k1;k2 grob, siehe Beschreibung)
End 4. Verfahrensschritt                    (zu Figur 2b nachstehend)
```

In einem 5. Verfahrensschritt erfolgt die Framesynchronisation und der Übergang zur automatischen und schmalbandigen Frequenznachführung, wobei von einem Frame 91 (Figur 4) mit 7 Slots 95 im Downlink 92 ausgegangen wird, zu deren Beginn Präambelsendungen 122 (Figur 7) erfolgen und die weiteren 8 Slots im Regelfall keine Präambelsendung enthalten dürfen.

```
Start 5. Verfahrensschritt
    for z:=0 to 21                          (z:=(15+7) Slots)
    begin
        n:=Pos_Max(0)+z*F                  (F:=Anzahl der Chips per Slot 95)
        Korrelation über Abtastwerte a(n)...a(n-30)   (Korrelationen im Slotabstand)
        SP(z):=I*I+Q*Q
        if SP(z)>C then
            S(z):=1                        (zu Framebeginn erkannte Präambel)
    end
    for z:=0 to 14                         (z:=14 letzter Wert für nachfolgend)
```

```
begin                                          (7 zusammenhängende Präambeln)
    if d<7 then                                (d für Downlink 92)
        if S(z)=1 then                         (erste Präambel)
            d:=1
            for t:=(z+1) to (z+6)              (Prüfung auf 6 nachfolgende)
            begin                              (Präambeln)
                if S(z)=1 then
                d:=d+1
            end
        if d=7 then                            (7 Präambeln im Frameabstand in Folge)
            g:=z                               (Nummer der ersten Präambelposition)
            F_Start:=Pos_Max(0)+g*F            (Position des Framestart)
    end
    if d<7 then
        Start 3. Verfahrensschritt
    if g>7 then                                (Bestimmung der Lage der Start-)
        u:=g-8                                 (position des Uplink 93)
    else
        u:=g+7
    for u to u+7                               (Prüfung über 8 zusammenhängende)
    begin                                      (Slotpositionen)
        if S(g)=1 then                         (Prüfung auf unzulässige Präambeln)
            k:=1
    end
    if k>0 then                                (Rückfall, wenn im Uplink Präambeln)
        Start 3. Verfahrensschritt             (erkannt wurden)
        Start automatische Frequenz-/Phasenregelung / fein     (mit k1;k2 fein, siehe Beschreibung)
    End 5. Verfahrensschritt                   (zu Figur 2b nachstehend)
```

Der 6. Verfahrensschritt beinhaltet, im Betriebszustand einmal pro Frame 91 den optimalen Zeitpunkt für die Abtastung zu bestimmen und nachzuführen, indem die Abtastung der Präambeln einer Downlinkperiode (92) von Slot zu Slot jeweils um einen Teilbetrag einer Chipdauer verschoben erfolgt, wobei die derart modifizierten Abtastzeitpunkte symmetrisch zum bisherigen Abtastzeitpunkt als dem Erwartungswert liegen, und über eine Mittelwertbildung der mit den Korrelationswerten bewerteten Abtastzeitpunkte der Abstand des optimalen Abtastzeitpunktes zum Erwartungswert bestimmt und der Abtastzeitpunkt für die nächstfolgende Downlinkperiode auf den so bestimmten optimalen Abtastzeitpunkt als neuen Erwartungswert eingestellt wird, wobei nachfolgend von einem Oversamplingfaktor 8 und 7 Abtastwerten pro Präambel 122 ausgegangen wird.

```
Start 6. Verfahrensschritt
    for z:=0 to 6                              (7 Abtastwerte symmetrisch um)
                                               (aktuellen Abtastwert)
    begin                                      (Abtastwert mit Oversampling 8-fach)
```

Korrelation über Abtastwerte a(F_Start+z*F+(z-3)/8)...a(F_Start+z*F+(z-3)/8-30)

SP(z):=I*I+Q*Q

end

F_Start:=F_Start+4*(SP(0)+SP(1)+SP(2)-SP(4)-SP(5)-SP(6))/Σ(SP(z)/8      (Bemerkung 6.1)

End 6. Verfahrensschritt

(Bemerkung 6.1: Der berechnete Mittelwert der Abweichung resultiert aus dem 8-fachen Oversampling und ist daher durch 8 zu dividieren, um F_Start in der Maßeinheit Chip zu korrigieren. Des weiteren bezieht sich besagter Mittelwert auf die Mitte der betrachteten Downlinkperiode 92 und stellt somit die Drift über ≈ 1/4 Frame 91 dar. Für die Korrektur des F_Start des nachfolgenden Frame wird daher unter Annahme einer konstanten Drift eine Extrapolation durch eine Multiplikation mit dem Faktor 4 vorgenommen.)

Die Einrichtung nach Figur 2b umfaßt die Einrichtungen zur Realisierung des 7. Verfahrensschrittes, welcher die Bestimmung der Referenzphase und die Korrektur der Empfangsdaten unter Beachtung der Referenzphase beinhaltet. Dieser Teil umfasst eine Einrichtung zur Bestimmung der Referenzphase 26 und einen Multiplizierer 24 zur Datenkorrektur. Die Eingangssignale des Q-Zweiges 22 und des I-Zweiges 23, welches die Ausgangssignale der Matchedfilter in den Q- und I-Zweigen darstellen, liegen parallel an Eingängen der Einrichtung zur Bestimmung der Referenzphase 26 und des Multiplizierers 24 an.

In der Einrichtung zur Bestimmung der Referenzphase 26 wird einmal pro Slot (95) (Figur 4) die Referenzphase für die kohärente Demodulation in diesem Slot bestimmt. Die Bestimmung erfolgt

- an Hand der Präambelsymbole 122 (Figur 7)
- oder Hand der Referenzsymbole 123, wenn solche optional zusätzlich zu Präambelsymbolen übertragen werden,
- oder Hand der Referenzsymbole 123, wenn im Uplink 93 Präambelsymbole nicht in jedem Slot zur Verfügung stehen

auf Grund der a priori Kenntnis über die Modulation der Präambelsymbole oder Referenzsymbole mit der Trägerbezugsphase Null nach der Beziehung

$$\sin(\Phi) = \frac{q\text{-}i}{\sqrt{2*(q^2+i^2)}} \qquad \cos(\Phi) = \frac{q+i}{2*(q^2+i^2)}$$

Sofern eine Mehrzahl von Präambel oder Referenzsymbolen für die Bestimmung der Referenzphase zur Verfügung steht, erfolgt eine entsprechend mehrfache Bestimmung und Mittelung über die derart bestimmten Einzelwerte.

Die im besagten Slot nachfolgenden Daten werden in dem Multiplizierer 24 mit der derart berechneten Referenzphase verknüpft und als referenzphasenkorrigierte Signale Q(ϕ) 27 und I(ϕ) 28 ausgegeben, wobei gilt

$$Q(\Phi) = i*\cos\Phi + q*\sin\Phi \qquad I(\Phi) = q*\cos\Phi - i*\sin\Phi$$

Die referenzphasenkorrigierten Signale Q(ϕ) 27 und I(ϕ) 28 sind als Eingangssignale an den Multiplizierer 42 angelegt. In besagtem Multiplizierer erfolgt die Phasenkorrektur mit dem akkumulierten Phasenkorrektursignal ⊖ 40, welches in dem Wandler für Bildung der komplexen Korrekturphase 41 in die Größen cos⊖ und sin⊖ aufbereitet wurde. Ergebnis sind die phasenkorrigierten Signale Q(⊖) 45 und I(⊖) 44 nach der Beziehung

$$Q(\Theta) = I(\Phi)*\cos\Theta + Q(\Phi)*\sin\Theta \qquad I(\Theta) = Q(\Phi)*\cos\Theta - I(\Phi)*\sin\Theta$$

Besagte phasenkorrigierte Signale Q(⊖) 45 und I(⊖) 44 werden den Multiplizierern 32 und 33 und dem Entscheider 30 zugeführt, welcher im Falle der im erfindungsgemäßen Verfahren benutzten QPSK-Modulation die Daten als D(Q) = ± 1 und D(I) = t ± ausgibt, welche Werte auch als Signumwerte den Multiplizierern 32 und 33 zugeführt werden. Die Multiplikationsergebnisse der Multiplizierer 32 und 33 und deren Addition in dem Addierer 34 liefern das unbewertete Phasenfehlersignal Δφ 35 nach der Beziehung

$$\Delta\varphi \sim SIG(D(I))*Q(\ominus) - SIG(D(Q))*I(\ominus).$$

Die dargestellte Beziehung ist eine für kleine Phasenfehler gültige Näherung, welche an Hand der Figur 2c noch erläutert wird.

Im Unterschied zu Figur 2a wird die aktuelle Phasendifferenz $\Delta\varphi$ 35 zwei parallelen Rückkoppelzweigen zugeführt. Ein erster Zweig enthält einen Multiplizierer 51, in welchem die Phasendifferenz $\Delta\varphi$ 35 mit einem Rückkopplungsfaktor k1 52 multipliziert und das Ergebnis einer nachfolgenden integrierenden Einrichtung zugeführt wird, welche ein Ausgangssignal $\Delta f := \Delta f + k1*\Delta\varphi$ liefert. Ein zweiter Zweig ist ein linearer Zweig mit dem Multiplikator 36, welcher Zweig dem Rückkoppelweg in Figur 2a entspricht, jedoch mit einem im Betrag abweichenden Rückkopplungsfaktor k2 50 und dem Ausgangssignal $k2*\Delta\varphi$. Für die Rückkoppelfaktoren k1 52 und k2 50 gilt wie oben beschrieben k1 = c1/|Signal($\ominus$)| und k2 = c2/|Signal($\ominus$)|, um die Abhängigkeit des $\Delta\varphi$ vom Betrag des Datensignals zu eliminieren. Des weiteren sind die Rückkoppelfaktoren in den Teilnehmerstationen und der Basisstation unterschiedlich, bedingt dadurch, daß wie unten beschrieben die Teilnehmerstationen in ihrem Sendzweig eine Phasenvorverzerrung durchführen und das Empfangssignal der Basisstation somit mit einer verringerten Phasenablage und Phasendrift behaftet ist. Die Ergebnisse beider Rückkopplungswege werden in dem Addierer 56 zusammengeführt. Die weitere Struktur und Verarbeitung entspricht wieder der Beschreibung zu Figur 2a. Die akkumulierte Phase $\ominus$ 40 am Ausgang des integrators 39 ergibt sich somit zu $\ominus := \ominus + \Delta f + k2*\Delta\varphi$. Bei nicht überkritischer Kopplung durch die Rückkoppelfaktoren k1 52 und k2 50 weist der Wert $\Delta f$ geringe Schwankungen auf und entspricht einer von Symbol zu Symbol konstanten Phasenabweichung, oder in anderer Betrachtungsweise einer Frequenzablage, während der Wert $k2*\Delta\varphi$ den stochastischen Phasenschwankungen folgt.

In der Teilnehmerstation wird die besagte Trägerregelung entsprechend Darstellung in Anspruch 2 nach dem dort beschriebenen vierten Verfahrensschritt in Betrieb genommen. Dabei werden Rückkoppelfaktoren k1 52 und k2 50 verwendet, die eine breitbandige und schnelle Frequenzacquisition herbeizuführen. Nach einer Abgleichzeit über ca. zwei Frame 91 (Figur 4) werden die genannten Rückkoppelfaktoren im Betrag verringert, was eine feinstufigere Nachführung für den regulären Betriebszustand zur Folge hat.

In Figur 2c ist die Modulationskennlinie einer QPSK dargestellt. Beispielhaft für ein zu demodulierendes optimales Signal ist die Phasenlinie 70 eingezeichnet, weiche für die Datenwerte D(Q) = D(I) = +1 steht.

Des weiteren ist ein zu demodulierendes reales Signal mit einem Phasenfehler $\Delta\varphi$ 73 und den Datenbeträgen D(Q) 71 und D(I) 72 dargestellt. Die Projektion von D(I) 72 auf den Schnittpunkt mit der Linie 70 teilt die Strecke D(Q) 71 in die Teile D(I) 73 und D(Q)-D(I) 74. Für kleine Phasenabweichungen $\Delta\varphi$ 73 besteht Proportionalität zwischen $\Delta\varphi$ und der Teilstrecke D(Q)-D(I) 74.

Die Bedingung der kleinen Phasenabweichung $\Delta\varphi$ 73 gilt streng genommen nur für den eingeschwungenen Zustand des Systems. Wie oben beschrieben, ist dieser eingeschwungene Zustand dadurch charakterisiert, daß der Wert des akkumulierten Phasenfehlersignals $\Delta f$ 55 nur noch geringe Schwankungen aufweist und somit einer von Symbol zu Symbol konstanten Phasenabweichung entspricht. Dieser Wert wird deshalb beim Empfang von Daten im Downlink benutzt, um für eine Zeitdifferenz zwischen der Bestimmung der Referenzphase zu Beginn eines Slot (95) und der Demodulation des ersten Symbols auf der Grundlage besagter Referenzphase für die Demodulation dieses ersten Symbols ein $\ominus = \Delta f *$Zeitdifferenz als Startwert vorzugeben, wobei die besagte Zeitdifferenz als Anzahl der Symbolabstände angegeben wird, und als $\Delta f$ derjenige Wert benutzt wird, mit welchem der vorangegangene Slot beendet wurde.

Der Wert des akkumulierten Phasenfehlersignals $\Delta f$ 55 findet weiter Verwendung, um bei der Sendung von Daten im Uplink eine Phasenvorverzerrung der zu sendenden Daten durchzuführen, indem besagter Wert, welcher beim Datenempfang in der Einrichtung zur entscheidungsrückgekoppelten Trägerregelung gewonnen wurde, als Phasendifferenzsignal $\Delta f$ (60) benutzt wird, wobei für besagte Vorverzerrung derjenige Wert des akkumulierten Phasenfehlersignals $\Delta f$ (55) benutzt wird, mit welchem der letzte Slot der vorangegangenen Downlinkperiode (92) beendet wurde. Die Berechtigung des Verfahrens resultiert daraus, daß das akkumulierten Phasenfehlersignal $\Delta f$ (55) der Frequenzablage eines LO (Local Oszillator) entspricht, welcher gleichermaßen für den Empfangs- wie auch den Sendebetrieb benutzt wird.

In Figur 3 ist eine Einrichtung dargestellt, welche das Verfahren realisiert, indem

- das Phasendifferenzsignal $\Delta f$ (60) einem Integrator (61) zugeführt wird, der an seinem Ausgang das akkumulierte Phasenkorrektursignal nach der Beziehung $\ominus := \ominus + \Delta f$ bereitstellt
- und das akkumulierte Phasenkorrektursignal $\ominus$ in einem Wandler (62) in eine komplexe Korrekturphase umgesetzt und besagte Korrekturphase in einem Multiplizierer (64) mit dem komplexen Sendesignal (63) multipliziert das phasenvorverzerrte Ausgangssignal (65) ergibt

und solcherart die Frequenzablage der Teilnehmerstation in Relation zur Basisstation kompensiert wird.

Die Einrichtung entsprechend Figur 2b findet außer in den Teilnehmerstationen 4 auch in der Basisstation 1 je einmal in jedem der Codekanäle 90 Verwendung. Abweichend zur Anwendung in den Teilnehmerstationen gilt, daß

- die Bestimmung der Referenzphase und der darauf beruhenden Korrektur der Daten generell an Hand von Referenzsymbolen 123 (Figur 7) erfolgt, da Präambelsymbole in der Uplinkrichtung 93 (Figur 4) im jeweiligen Codekanal 90 und Slot 95 nur zu ausgewählten Zeitpunkten zur Verfügung stehen,
- für die Demodulation des ersten Datensymbols eines Slots 95 kein Startwert $\ominus$ = $\Delta$f*Zeitdifferenz, wie oben für die Teilnehmerstationen beschrieben, vorgegeben wird, da die Teilnehmerstationen wie oben beschrieben bereits eine Phasenvorverzerrung durchführen. Diese Verfahrensweise ist zwingend, da in der Basisstation zwei aufeinanderfolgende Slots unterschiedlichen Teilnehmerstationen zugeordnet sein können und damit eine Übernahme des $\Delta$f von Slot zu Slot unzulässig ist.

Figur 4 beschreibt das Kanalschema einer konkreten Ausführung der Erfindung bei Nutzung von CDMA in Verbindung mit TDM/TDMA und TDD. Die Codekanäle 90.0 bis 90.n besitzen eine einheitliche Kanalstruktur. Grundstruktur ist ein Frame 91, unterteilt in die Downlinkperiode 92, die Uplinkperiode 93 und einen Slot für Laufzeitausgleich und Startup-Synchronisation 94. Zur besseren Übersicht ist die Zeitachse 96 mit dargestellt. Die Downlinkperiode 92 beinhaltet die Aussendungen der Basisstation 1 (Fig. 1) und die Uplinkperiode 93 die Aussendungen der Teilnehmerstationen 4. Zur Realisierung des TDMITDMA ist der Frame in 15 Slots 95.0 - 95.14 (Fig. 4) gleicher Dauer unterteilt. Die Slots 95.0 - 95.6 sind der Downlinkperiode 92 und die Slots 95.8 - 95.14 der Uplinkperiode 93 zugeordnet. In dieser Kanalstruktur ist der Slot 95.7 mit dem Slot für Laufzeitausgleich und Startup-Synchronisation 94 identisch. Für die Nutzung im Duplexverfahren sind die Slots 95.i paarweise nach dem Schema (i,i+8) mit i=0..6 einander als Nutzkanäle zugeordnet.

Figur 5 beschreibt die Struktur eines Multiframe_6 (MF_6) für einen Codekanal, basierend auf einem Kanalschema entsprechend Figur 4, die sich aus dem nachfolgenden Nutzungsschema für die Slots 95.0 - 95.6 und die Slots 95.8 - 95.14 ergibt. Dargestellt ist eine Folge von sechs Frames 101.0 - 101.5, die gemeinsam einen MF_6 100 bilden. Die Bezeichnungsweise/Zählweise für die Frames eines MF_6 Nr. i ist MF_6(i,0..5), wobei i die Nummer des MF_6 innerhalb eines unten beschriebenen Hyperframes ist.

Die Figur 5 stellt die identischen Ordnungsschemata für die Slots 95.0 bis 95.6 und Slots 95.8 bis 95.14 dar, beispielhaft erläutert an den Slots 95.0 bis 95.6:

- Die Slots 95.0 bis 95.5 werden als primäre Slots für die Nutzdatenübertragung verwendet und sind die kleinste einer Verbindung zuordenbare Einheit. Mehrkanalzuweisungen zur Erhöhung der Übertragungskapazität einer Verbindung sind möglich.
- Der Slot 95.6 wird modulo 6 umlaufend den primären Slots 95.0 bis 95.5 zugeordnet, womit sich ein MF_6 100 ergibt, der 6 Frames umfaßt.

Damit sind im Frame MF_6(i,j) wie dargestellt jeweils der Slot 95.j und der Slot 95.6 einander zugeordnet. Das Ordnungsschema der Slots 95.8 bis 95.14 ist adäquat und mit gleicher Zählrichtung. Die Nutzung dieser Ordnungsschemata erfolgt derart, daß, beispielhaft erläutert an den Slot 95.0 bis 95.6,

- bei Verbindungen, die eine gesonderte Signalisierung verwenden und welchen nur ein Slot für die Übertragung von Nutzdaten zugewiesen ist, der Slot 95.6 ausschließlich für die Signalisierung benutzt wird,
- bei Verbindungen, die eine gesonderte Signalisierung verwenden und welchen mehrere Slots für die Übertragung von Nutzdaten zugewiesen sind, mindestens ein Slot 95.6 für die Signalisierung Verwendung findet, weitere der Slot 95.6 in Abhängigkeit von Festlegungen zum Verbindungstyp jedoch auch für die Nutzdatenübertragung Verwendung finden. So werden in einer konkreten Ausführung der Erfindung einem bestimmten Verbindungstyp alle Slots 95.0 bis 95.5 eines Codekanals zugewiesen, womit diese Verbindungen auch über alle Slots 95.6 eines MF_6 verfügen. Festlegungsgemäß wird von diesen Verbindungen nur der Slot 95.6 des ersten Frames 101.0 im MF_6 100 für die Signalisierung genutzt und die Slot 95.6 aller weiteren Frames im MF_6 werden für die Übertragung von Nutzdaten verwendet.
- bei Verbindungen, die keine gesonderte Signalisierung verwenden, wie zum Beispiel bei TCP/IP-Verbindungen, das Nutzungsschema beibehalten, der Slot 95.6 aber generell für die Übertragung von Nutzdaten verwendet wird.

Die Slots 95.8 bis 95.14 werden in gleicher Weise genutzt.

Figur 6 beschreibt die Einordnung der speziellen Kanäle für Synchronisation und Steuerung sowie der Schutzzeit für den Laufzeitausgleich in das TDD und das Kanalschema entsprechend Figur 4.

Dargestellt wird der Pool der Codekanäle 90 für die Dauer eines Frame 91. Zur besseren Übersicht ist die Zeitachse 96 mit dargestellt. Im Codekanal 90.0 sind im Slot 95.0 ein BCH 110 (Broadcast Channel) und im Slot 95.7 ein RACH 112 (Random Access Channel) angeordnet. Der achte Slot 115 wird im Codekanal 90.0 bestimmungsgemäß nicht benutzt.

Dargestellt ist des weiteren, daß der Slot für Laufzeitausgleich und Startupsynchronisation 94 nur im Codekanal 90.0 mit Aussendungen durch den RACH 112 belegt ist, welcher gegenüber der Slotdauer so verkürzt ist, daß die entstehende Lücke noch hinreichend groß für den Laufzeitausgleich ist. In allen weiteren Codekanälen 90.1 bis 90.n wird der Slot für Laufzeitausgleich und Startupsynchronisation 94 bestimmungsgemäß nicht mit Aussendungen belegt.

Das erfindungsgemäße Verfahren führt Verbindungsaufbau und Startupsynchronisation mit Nutzung der BCH 110 und RACH 112 bei Teilnehmerstationen durch, die zum Zeitpunkt keine anderweitige aktive Verbindung besitzen. Die Verfahrensschritte sind:

- die Basisstation 1 (Fig. 1) sendet eine Verbindungsanforderung für kommenden Verkehr mit Angabe der Adresse (ID) der gerufenen Teilnehmerstation 4 und des Diensttyps im BCH 110 (Fig. 6). Die adressierte Teilnehmerstation 4 antwortet im RACH 112 des gleichen Frame 91 mit Angabe ihrer Teilnehmerstations-ID. Ein Hazard mit Aussendungen anderer Teifnehmerstationen 4 kann nicht auftreten, da für diese die an eine bestimmte Teilnehmerstation gerichtete Sendung der Basisstation 1 im BCH 110 eine Sperre von Aussendungen bewirkt.

- oder eine Teilnehmerstation sendet eine Verbindungsanforderung für gehenden Verkehr mit Angabe der Adresse (ID) der rufenden Teilnehmerstation 4 und des Diensttyps im RACH 112. Ein Hazard mit Aussendungen anderer Teilnehmerstationen 4 kann auftreten und führt dann in der Regel zum Abbruch des Verfahrens infolge gegenseitiger Störung des Empfangs in der Basisstation 1. Die Entflechtung der Hazardbeteiligten erfolgt derart, daß jede dieser Teilnehmerstationen 4 eine Zufallszahl im Bereich zwischen 0 und 15 generiert und eine dieser Zahl entsprechende Anzahl von Frames bis zu elner Wiederholung der Anforderung verstreichen läßt. Der Random Access durch Teilnehmerstationen ist zulässig, wenn die Aussendung der Basisstation 1 im BCH 110 des gleichen Frames nicht an eine andere Teilnehmerstation adressiert war oder keine Vollastinformation oder keine allgemeine Anrufsperre enthielt. Die Basisstation 1 besitzt eine Hazarderkennung, umfassend eine Einrichtung zum Empfang der von den Teilnehmerstationen im RACH 112 einleitend ausgesandten Präambelsymbole, welche mit der Codesequenz erster Form (siehe Beschreibung zu Figur 7) gespreizt sind. Diese Einrichtung arbeitet durchgängig während der gesamten Dauer des Slot 95.7 und überwacht, ob nach Empfang und Bewertung der Sendung besagter Präambeln durch eine erste Teilnehmerstation weitere der besagten Präambeln empfangen werden, die von einer zweiten Teilnehmerstation herrühren, und löst für diesen Fall eine Fehlermeldung aus, die für beide Teilnehmerstationen zu einer Rückweisung führt.

Der besagte Random Access der Teilnehmerstationen 4 im RACH 112 erfolgt zum frühestmöglichen Zeitpunkt nach Empfang der Downlinkperiode 92. Auf Grund der unterschiedlichen Entfernungen zwischen Basisstation 1 und den Teilnehmerstationen 4 ist die Lage des RACH 112 im Slot für Laufzeitausgleich und Startupsynchronisation 94 beim Empfang in der Basisstation 1 nicht fixiert. In Figur 6 ist die Lage für eine Teilnehmerstation 4 in der maximal zulässigen Entfernung dargestellt. Die Basisstation 1 kann aus der Messung der Lage des RACH 112 unmittelbar auf die Entfernung der sendenden Teilnehmerstation 4 schließen und berechnen, um wleviel die Aussendung dieser Basisstation verzögert werden muß, damit die Lage des RACH 112 in die Position verschoben wird, die der Darstellung in Figur 6 und damit der Synchronisation der Teilnehmerstation 4 Insgesamt entspricht. Die Bestimmung erfolgt wie nachfolgend beschrieben:

```
Start Bestimmung Delay
    PR2:=PR1+S2                                    (Bemerkung 1)
    if n=PR2-1 then                                (Start eine Chipposition vor PR2)
        for p:=1 to 15                             (15 Abtastungen symmetrisch um PR2)
        begin
            Korrelation über Abtastwerte a(n+p/8)...a(n-S2+p/8)   (8-fach Oversampling)
            SP(p):=I*I+Q*Q
            if S(p)>C then                         (Prüfung auf Schwellenwertüber-)
                K:=1                               (schreitung)
        end
    if K<1 then                                    (Prüfung, ob mindestens eine)
        Fehlermeldung                              (Schwellenwertüberschreitung)
    PR2:=PR2+((S(1)+S(2)+...S(7))-(S(9)+S(10)+...S(15))/Σ(S(p)/8
    DLY:=PR2-PR2_Soll                              (Bemerkung 2)
End Bestimmung Delay
```

(Bemerkung 1: PR2 ist der Erwartungswert der Position des Präambelsymbols, welches mit der Codesequenz zweiter Form gespreizt ist, bezogen auf die Position des letzten mit der Codesequenz erster Form gespreizten Präambelsymbols. Die Differenz beider Positionen ergibt sich durch die Länge der Codesequenz zweiter Form S2. Alle Werte sind In der Maßeinheit Anzahl der Chiptakte n, bezogen auf die Position F_Start mit n:=0 angegeben.)

(Bemerkung 2: Nach Mittelung über die 15 Abtastwerte SP(p) wird die tatsächliche Lage von PR2 in Relation zum Erwartungswert von PR2 ermittelt. DLY ist der Betrag, um welchen die betreffende Teilnehmerstation verzögert aussenden muß, damit die Sendung besagter Präambel exakt zum Zeitpunkt PR2_Soll, und somit die Sendung des RACH 112 exakt entsprechend Darstellung in Figur 6 in der Basisstation eintriffen und somit auch die Sendungen der Teilnehmerstation im Uplink 93 Frame-, Codesequenz- und Chipsynchron in der Basisstation eintriffen. Alle Werte sind in der Maßeinheit Anzahl der Chiptakte n angegeben, wobei PR2_Soll ein Integer ist und DLY und PR2 eine Auflösung von 1/8 Chip besitzen.)

Die weiteren Verfahrensschritte sind unabhängig von der Richtung der Anforderung wie folgt:

- die Basisstation 1 mißt wie oben beschrieben die Lage des RACH 112 im Slot für Laufzeitausgleich und Startupsynchronisation 94. Bei nicht hinreichend sicherer Messung infolge ungenügendem Signal/Störabstand kann die Basisstation 1 in nachfolgenden Frames 91 eine oder bis zu drei Wiederholungen der Prozedur im BCH 110 / RACH 112 anweisen und vornehmen.
- die Basisstation 1 (Fig. 1) sendet in einem nachfolgenden Frame 91 im BCH 110 an die Teilnehmerstation 4 die Kanalzuweisung und die Weisung über die Zeitverzögerung der Aussendungen, die aus der Lage des RACH 112 im Slot für Laufzeitausgleich und Startupsynchronisation 94 bestimmt wurde.
- die Teilnehmerstation 4 wechselt in den zugewiesenen Kanal und sendet mit der angewiesenen Verzögerung.

Der Slot 116 (Fig. 6) ist vom Typ 95.6 (Fig. 5) und über den MF_6 100 mit den BCH 110 in der dort beschriebenen Weise verknüpft und ist in das Verfahren der Startupsynchronisation und weiterer Startupprozeduren wie oben geschildert nicht einbezogen. Gleiches gilt adäquat für den Slot 118. Es werden wahlweise zwei Nutzungen vorgenommen:

- eine erste Nutzung besteht in der Verwendung des Slots 116 für unidirektionale Broadcastsendungen der Basisstation 1.
- eine zweite Nutzung besteht in der Verwendung des Slotpaares 116/118 für OA&M- oder Servicezwecke, die nur eine geringe Übertragungsrate erfordern, da diese Slots in jedem MF_6 100 (Fig. 5) nur einmal, jeweils im Frame MF_6(1,0), zur Verfügung stehen.

Figur 7 stellt den allgemeinen Aufbau verschiedener Slottypen dar.

Der Slottyp 120 wird im Downlink 92 (Figur 4) und in ausgewählten Slots des Uplink entsprechend der Vorschriften des Multiframe_32 130 (MF_32, siehe Beschreibung unten) verwendet und umfaßt Präambelsymbole 122, optional in einer besonderen Ausführung Referenzsymbole 123, eine Packed Data Unit 121 (PDU) und eine Schutzzeit 124. Die Referenzsymbole sind mit der Codesequenz des jeweiligen Codekanals 90 gespreizt und dienen, wenn in der besonderen Ausführung vorhanden, der Bestimmung der Parameter für die kohärente Demodulation der Daten. Andernfalls werden hierfür die Präambelsymbole 122 verwendet. Die Präambelsymbole 122 sind für die gesamte Einrichtung einheitlich und werden mit einer einheitlichen Sequenz gesendet. Diese Sequenz ist nicht aus dem Vorrat der Codesequenzen des CDMA des Nutzdatenbereiches ausgewählt. Es folgt, daß die Präambelsendungen im Downlink 92 (Figur 4) Infolge der additiven Überlagerung der CDMA-Kanäle in der Basisstation 1 bei den empfangenden Teilnehmerstationen 4 mit einer hohen Symbolenergie eintreffen. Dies führt zur Verbesserung der Erkennung und Synchronisation auf die eintreffenden Sendungen in den Teilnehmerstationen 4.

In den ausgewählten Slots des Uplink entsprechend der Vorschriften des MF_32 (siehe Beschreibung unten) kann die Basisstation 1 aus der Messung der Position der Präambel unmittelbar auf die der Synchronität der sendenden Teilnehmerstation 4 schließen und berechnen, um wieviel die Aussendung dieser Teilnehmerstation korrigiert werden muß, damit eine optimale Synchronisation wieder hergestellt wird. Die Bestimmung erfolgt wie nachfolgend beschrieben:

Start Bestimmung Synchronisation

```
PR:=F*N_Slot                                        (Bemerkung 1)
if n=PR-1 then                                      (Start eine Chipposition vor PR2)
    for p:=1 to 15                                  (15 Abtastungen symmetrisch um PR2)
    begin
        Korrelation über Abtastwerte a(n+p/8)...a(n-S2+p/8)   (8-fach Oversampling)
        SP(p):=I*I+Q*Q
        if S(p)>C then                              (Prüfung auf Schwellenwertüber-)
            K:=1                                     (schreitung)
    end
if K<1 then                                         (Prüfung, ob mindestens eine)
    Fehlermeldung                                   (Schwellenwertüberschreitung)
    DLY:=((S(1)+S(2)+...S(7))-(S(9)+S(10)+...S(15))/Σ(S(p)))/8      (Bemerkung 2)
End Bestimmung Synchronisation
```

(Bemerkung 1: PR ist der Erwartungswert der Position des Präambelsymbols, bezogen auf die Position F_Start mit n:=0, F die Anzahl der Chips pro Slot 95 und N_Slot die Nummer des Slot im Frame 91.

Alle Werte sind in der Maßeinheit Anzahl der Chiptakte n angegeben.)

(Bemerkung 2: DLY wird durch Mittelung über die 15 Abtastwerte SP(p) ermittelt und stellt die Differenz der Sollposition von PR in Relation zum Istwert von PR dar. Der Wert ist in der Maßeinheit Anzahl der Chiptakte n angegeben und besitzt eine Auflösung von 1/8 Chip.)

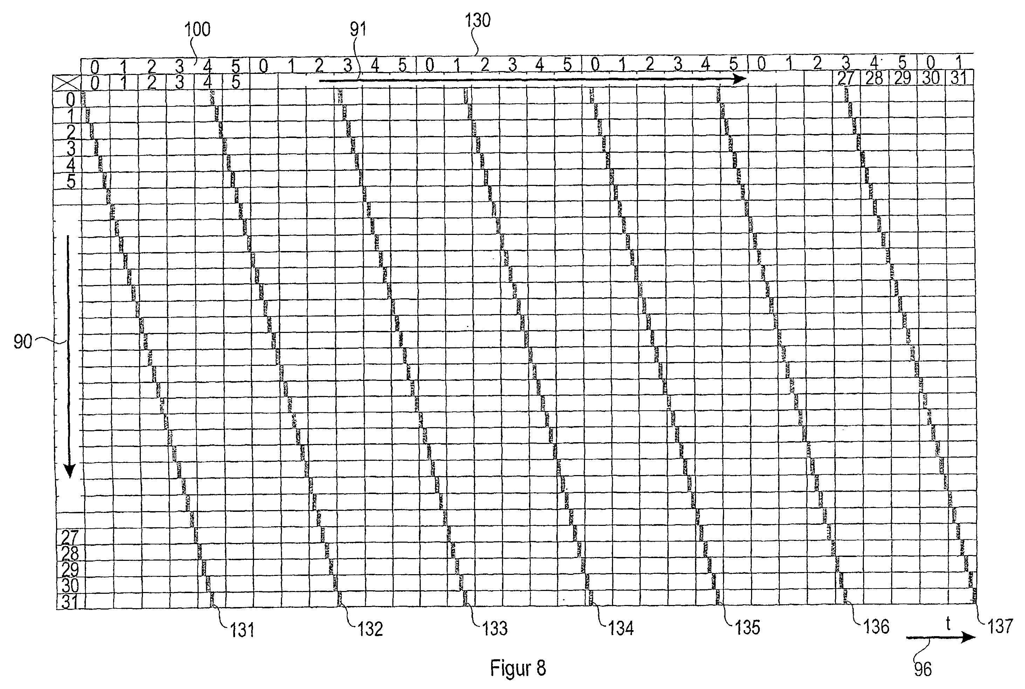

Der Slottyp 125 wird im Uplink 93 verwendet, ausgenommen die durch den MF_32 130 (Figur 8) speziell vorgegebenen Fälle entsprechend der untenstehenden Beschreibung. Der Unterschied zum Slottyp 120 ist, daß an Stelle der Präambelsymbole 122 eine Schutzzeit 126 tritt. Der Slottyp 125 besitzt generell Referenzsymbole 123, welche mit der Codesequenz des jeweiligen Codekanals 90 gespreizt sind und der Bestimmung der Parameter für die kohärente Demodulation der Daten dienen.

Der Slottyp 127 wird nur als Slot 95.7 im Codekanal 90.0 verwendet und umfaßt die Schutzzeit für Laufzeitausgleich 128 und den RACH 112 (Figur 4) mit Präambelsymbolen 122, optional in einer besonderen Ausführung mit Referenzsymbolen 123, der verkürzten Packed Data Unit 129 und einer Schutzzeit 124. Die Präambelsymbole 122 umfassen mindestens zwei Präambelsymbole, welche mit einer Codesequenz erster Form gespreizt sind, welche Codesequenz gegenüber den Codesequenzen für die nachfolgend zu übertragenden Daten verkürzt ist, und mindestens ein Präambelsymbol, welches mit einer Codesequenz zweiter Form gespreizt ist und welche Codesequenz gegenüber den Codesequenzen für die nachfolgend zu übertragenden Daten verlängert ist. Die Referenzsymbole dienen, wenn in der besonderen Ausführung vorhanden, der Bestimmung der Parameter für die kohärente Demodulation der Daten. Andernfalls werden hierfür die Präambelsymbole 122 verwendet, welche mit der Codesequenz zweiter Form gespreizt sind. Die Referenzsymbole und Datensymbole im Slottyp 127 / RACH 112 sind mit der Codesequenz gespreizt, welche für den Codekanal 90.0 gilt.

Figur 8 beschreibt die Struktur und Funktion eines Multiframe_32 (MF_32) 130 für eine Ausführung der Erfindung mit 32 Codekanälen 90. Figur 9 stellt der besseren Erläuterung wegen einen Ausschnitt aus Figur 8 dar. Ein MF_32 umfaßt 32 Frames 91 (Figur 4). Das kleinste gemeinsame Vielfache von MF_32 und MF_6 6 ist 96 und wird als ein Hyperframe verwendet, der zur eindeutigen Adressierung aller Elemente in der Framestruktur Verwendung findet, so daß sich bei Verwendung eines gemeinsamen Framezählers z = 0..95 eine Numerierung des MF_32 (0..2) und eine Numerierung der MF_6 (0..15) ergibt. Der einzelne Slot im MF_32 hat mit diesen Festlegungen die Bezeichnung MF_32(i,j,k), wobei i die Nummer des MF_32 (0..2), j die Nummer des Frame 91 im MF_32 mit j = z mod 32 und k die Nummer des Slot 95.k, k = 8..14 bedeuten.

Die Funktion eines MF_32 130 ist, eine solche Vorschrift zu schaffen, daß jedem Slot 95.k jedes Codekanals 90 im Uplink 93 (Figur 4) ein Zeitpunkt zugeordnet ist, zu welchem am Anfang dieses Slots und ausschließlich dieses Codekanals von einer Teilnehmerstation 4 die Aussendung von Präambelsymbolen 122 erfolgt. Die Aussendung der Präambeln erfolgt jeweils durch die Teilnehmerstation, welcher der besagte Slot auch für die Nutzung zugewiesen ist.

In Figur 8 ist über den Bereich eines gesamten MF_32 dargestellt, wie im Uplink 93 (Fig. 4) diese Berechtigung zyklisch über alle Codekanäle 90 und Slots 95.8 bis 95.14 derart verteilt wird, daß in jedem Codekanal 90 jeder der Slots 95.8 bis 95.14 mindestens einmal diese Berechtigung erhält. Die Darstellung enthält ausschließlich die Slots 95.8 bis 95.14. So sind dies, erläutert am Codekanal 31, die Slots MF_32(0,4,11) 131, MF_32(0,9,8) 132, MF_32(0,13,12) 133, MF_32(0,18,9) 134, MF_32(0,22,13) 135, MF_32(0,27,10) 136 und MF_32(0,31,14) 137.

Der Zusammenhang zwischen Zählerstand z des Hyperframe, Nummer des Slot k und Nummer des Codekanals c ist durch die Beziehung

$$c = ((z \bmod 32)*7+k-8) \bmod 32$$

gegeben.

In Figur 9 sind die Frames MF_32(i,0) 138 und MF_32(i,1) 139 weiter aufgelöst. Für einen Zählerstand z = 65 und den Slot 11 in diesem Frame ergibt sich nach obiger Beziehung

$$c = ((65 \bmod 32)*7+11-8) \bmod 32 = 10$$

Durch diese Beziehung ist eindeutig der Slot MF_32(i,1,11) 140 für die Aussendung der Präambelsymbole bestimmt.

Der Stand des Hyperframezählers wird von der Basisstation 1 entsprechend Möglichkeiten, wenn anderweitig keine Daten zu übertragen sind, als Broadcastsendung im Slot 116 (Figur 6) oder Füllinformation in Signalisierungskanälen übertragen. Damit wird in unregelmäßigen Abständen der Stand des Zählers aktualisiert, in den Zwischenzeiten wird in den Teilnehmerstationen 4 freilaufend weitergezählt.

Literaturstellenverzeichnis

[1] DE 4240249
[2] WO 99/55030
[3] WO 99/62268
[4] WO 99/61984
[5] EP 0927482
[6] WO 99/01969 (Familie zu [5])
[7] AU 8181498 (Familie zu [5])
[8] US 5905719
[9] WO 98/12833 (Familie zu [8])
[10] GB 2313981
[11] Vicente Quilez, Head of RCD Fixed Radio Systems Department, Alcatel, Telecom 99 Inter@ctive "Effiient provision of Internet in wireless access systems"
[12] US 6115370
[13] DE 198 36 888
[14] WO 99/25080

Bezugszeichenliste

| | |
|---|---|
| 1 | Basisstation |
| 2 | Antenne der Basisstation |
| 3 | Airinterface |
| 4 | Teilnehmerstation |
| 5 | Antenne der Teilnehmerstation |
| 6 | PSTN-Teilnehmerinterface der Teilnehmerstation |
| 7 | Endgerät des Teilnehmers |
| 8 | Ethernetschnittstelle der Teilnehmerstation |
| 9 | Rechner oder Rechnernetz des Teilnehmers |
| 10 | PCM-Schnittstelle der Basisstation |
| 11 | Optionale Anschaltbaugruppen |
| 12 | Ortsvermittlungszentrale |
| 13 | PSTN (Publik Switched Telephone Network) |
| 14 | Ethernetschnittstelle der Basisstation |
| 15 | Router |
| 16 | Datenleitung |
| 17 | ISP (Internet Service Provider) |
| 18 | Internet |
| 19 | OA&M-Center |
| 20 | Router/Proxyserver |
| 21 | Lokale OA&M-Einrichtung |
| 22 | Eingangssignal Q-Zweig |
| 23 | Eingangssignal I-Zweig |
| 24 | Multlplizierer |
| 25 | Referenzphasensignal |
| 26 | Einrichtung zur Bestimmung der Referenzphase |
| 27 | Referenzphasenkorrigiertes Signal $Q(\Phi)$ |
| 28 | Referenzphasenkorrigiertes Signal $I(\Phi)$ |
| 30 | Symbolentscheider |
| 32 | Multiplizierer |
| 33 | Multiplizierer |
| 34 | Addierer |
| 35 | Phasenfehlersignal $\Delta\varphi$, unbewertet |
| 36 | Multiplizierer |
| 37 | Rückkoppelfaktor k0 |
| 38 | Phasenfehlersignal, bewertet |
| 39 | Integrator |
| 40 | akkumuliertes Phasenkorrektursignal $\ominus$ |
| 41 | Wandler für Bildung der komplexen Korrekturphase |
| 42 | Multiplizierer |
| 44 | Phasenkorrigiertes Signal $I(\ominus)$ |
| 45 | Phasenkorrigiertes Signal $Q(\ominus)$ |
| 50 | Rückkoppelfaktor k2 |
| 51 | Multiplizierer |
| 52 | Rückkoppelfaktor k1 |
| 53 | Phasenfehlerslgnal, bewertet |
| 54 | Integrator |
| 55 | akkumuliertes Phasenfehlersignal $\Delta f$ |
| 56 | Addierer |
| 60 | Phasendifferenzsignal $\Delta f$ |
| 61 | Integrator |
| 62 | Wandler für Bildung der komplexen Korrekturphase |
| 63 | komplexes Sendesignal |
| 64 | Multiplizierer |

| 65 | komplexes Sendesignal mit Phasenvorverzerrung |
|---|---|
| 70 | Resultierende eines fehlerfreien phasenkorrigierten Signals I($\ominus$);Q($\ominus$) |
| 71 | Reales phasenkorrigiertes Signal Q($\ominus$) |
| 72 | Reales phasenkorrigiertes Signal I($\ominus$) |
| 73 | Signalbetrag I($\ominus$) |
| 74 | Signalbetrag Q($\ominus$)-I($\ominus$) |
| 90 | Codekanäle 0..n des CDMA-Verfahrens |
| 90.i | Codekanal Nr. i des CDMA-Verfahrens |
| 91 | Duplexframe |
| 92 | Downlinkperiode im Duplexframe |
| 93 | Uplinkperiode im Duplexframe |
| 94 | Slot für Laufzeitausgleich und Startup-Synchronisation |
| 95 | Slots 0..15 des TDMA-Verfahrens |
| 95.i | Slot Nr. 1 des TDMA-Verfahrens |
| 96 | Zeitachse |
| 100 | Multiframe_6 |
| 101 | Frames eines MF_6 |
| 101.i | Frame i eines MF_6 |
| 110 | BCH_1, Broadcast Channel |
| 112 | RACH, Random Access Channel |
| 115 | bestimmungsgemäß ungenutzter Slot |
| 116 | dem BCH 112 im MF_6 zugeordneter Downlink-Signalisierungsslot |
| 118 | dem Slot 115 im MF_6 zugeordneter Uplink-Signalisierungsslot |
| 120 | Slottyp mit Präambelsymbolen |
| 121 | Packed Data Unit PDU |
| 122 | Präambelsymbole |
| 123 | Referenzsymbole |
| 124 | Schutzzeit für Slottrennung |
| 125 | Slottyp ohne Präambelsymbole |
| 126 | Schutzzeit an Stelle von Präambelsymbolen |
| 127 | Slottyp im Slot 95.7 |
| 128 | Schutzzeit für Laufzeitausgleich |
| 129 | Verkürzte Packed Data Unit des RACH 112 |
| 130 | Multiframe _32 |
| 131 | Slot für Synchronisationsmessung MF_32(0,4,11) |
| 132 | Slot für Synchronisationsmessung MF_32(0,9,8) |
| 133 | Slot für Synchronisationsmessung MF_32(0,13,12) |
| 134 | Slot für Synchronisationsmessung MF_32(0,18,9) |
| 135 | Slot für Synchronisationsmessung MF_32(0,22,13) |
| 136 | Slot für Synchronisationsmessung MF_32(0,27,10) |
| 137 | Slot für Synchronisationsmessung MF_32(0,31,14) |
| 138 | Frame MF_32(i,0,8..14) |
| 139 | Frame MF_32(i,1,8..14) |
| 140 | Slot MF_32(i,1,11) eines Multiframe_32 |

**Patentansprüche**

1. Verfahren für die Synchronisation in einem Funkkommunikationssystem, unfassend die Frequenz-, Trägerphasen-, Codephasen- und Framesynchronisation, welches Funkkommunikationssystem eine Basisstation (1) umfaßt, die über ein Airinterface (3) mit einer Vielzahl von Teilnehmerstationen (4) verbunden ist, dessen Teilnehmerstationen sowohl über ein Teilnehmerinterface (6) für den Zugang zum PSTN und ein Ethernetinterface (8) für den Zugang zum Internet verfügen, die unabhängig voneinander und auch simultan nutzbar sind, und das Kommunikationssystem getrennte Zugangsnetzwerke zum PSTN und zum Internet realisiert, wobei die Kapazitätsverteilung zwischen beiden Zugangsnetzen belastungsabhängig angepaßt wird und das Airinterface mit DS CDM/CDMA und einem eingebetteten TDM/TDMA und TDD arbeitet, **gekennzeichnet dadurch, daß**

a) für die Synchronisation der Übertragung in der Downlinkrichtung (92) die Basisstation (1)

- in einem ersten Verfahrensschritt Präambelsymbole (122) generiert, welche für alle Timeslots (95) aller Codekanäle (90) im Downlink (92) identisch sind,
- in einem zweiten Verfahrensschritt die Präambelsymbole jeweils als erste Symbole in die Timeslots (120) aller Codekanäle einfügt,
- in einem dritten Verfahrensschritt die Präambelsymbole in die I- und Q-Zweige des Sendetraktes mit der Bezugsträgerphase Null umsetzt,
- in einem vierten Verfahrensschritt die Präambelsymbole in den I- und Q-Zweigen mit einer für alle Timeslots aller Codekanäle gleichen Codesequenz spreizt, die mit keiner der Codesequenzen für die nachfolgend zu übertragenden Daten übereinstimmt,
- in einem fünften Verfahrensschritt die Modulation und Aussendung in den Timeslots aller Codekanäle synchron vornimmt und durch die additive Überlagerung entsprechend der Anzahl der Codekanäle die Symbolenergie der Präambelsymbole die der Datensymbole des einzelnenen Codekanals übertrifft,

b) für die Synchronisation der Übertragung im RACH (112) in der Uplinkrichtung (93) eine auf den RACH zugreifende Teilnehmerstation (4)

- in einem ersten Verfahrensschritt Präambelsymbole generiert,
- in einem zweiten Verfahrensschritt mindestens drei Präambelsymbole jeweils als erste Symbole in den RACH einfügt,
- in einem dritten Verfahrensschritt die Präambelsymbole in die I- und Q-Zweige des Sendetraktes mit der Bezugsträgerphase Null umsetzt,
- in einem vierten Verfahrensschritt mindestens zwei erste Präambelsymbole In den I- und Q-Zweigen mit einer ersten Codesequenz spreizt, die gegenüber den Codesequenzen der Datenübertragung verkürzt ist,
- in einem fünften Verfahrensschritt die weiteren folgenden Präambelsymbole in den I- und Q-Zweigen mit einer zweiten Codesequenz spreizt, die gegenüber den Codesequenzen der Datenübertragung verlängert ist,
- in einem sechsten Verfahrensschritt die Modulation und Aussendung im RACH vornimmt,

c) für die Synchronisation der Übertragung der Datenslots (95) in der Uplinkrichtung (93) die Teilnehmerstationen (4)

- in einem ersten Verfahrensschritt prüfen, ob ein ihnen für die Übertragung zugewiesener nachfolgender Timeslot eines Codekanals entsprechend Zuordnungsschema in einem Multiframe (130) exclusiv für die Übertragung von Präambelsymbolen vorgesehen ist,
- diejenige Teilnehmerstation, für weiche dies zutrifft, nachfolgend die Verfahrensschritte 1 bis 5 entsprechend a), sinngemäß bezogen auf diesen einzelnen Timeslot, ausführt,
- und alle anderen Teilnehmerstationen an Stelle der Präambelsymbole eine Schutzzeit in die Übertragung einfügen.

2. Verfahren nach Anspruch 1, **gekennzeichnet dadurch, daß** in der Downlinkrichtung (92) besagte Präambelssendung der Basisstation mindestens ein Präambelsymbol umfaßt, und welche Präambelssendung in den Teilnehmerstationen genutzt wird, um

a) bei einem Startup nach Ersteinschaltung oder nach zeitweiliger Unterbrechung der Verbindung

- in einem ersten Verfahrensschritt an Hand der a priori Kenntnis der Präambelsequenz der Basisstation, bei welcher eine Anmeldung erfolgen soll, diese zu identifizieren,
- in einem zweiten Verfahrensschritt die Chipposition eines größten Präambelkorrelationswertes zu bestimmen, wofür ein einstellbarer Beobachtungszeitraum von mindestens der Dauer eines Frames (91) vorgebbar ist, und zum nächsten Verfahrensschritt übergegangen wird, wenn dieses Korrelationsmaximum größer als ein voreingestellter Schwellenwert war,
- in einem dritten Verfahrensschritt die Frequenzablage zur Basisstation zu bestimmen und zu korrigieren, indem im Abstand einer Framedauer zu den Zeitpunkten der im zweiten Verfahrensschritt ermittelten Lage des besagten Korrelationsmaximums unter Verwendung eines Oversamplings mit einer höheren Auflösung als der reguläre Abtasttakt zwei Gruppen von Korrelationswerten gemessen und die Lage des Korrelationsmaximums in den besagten Gruppen bestimmt wird und die Drift der Lage der Korrelationsmaxima in Relation zum regulären Abtasttakt bestimmt wird und aus der besagten Drift die Frequenzablage bestimmt und eine erste dedizierte Nachstellung der Frequenz vorgenommen wird,

- in einem vierten Verfahrensschritt eine Nachkorrektur des chipsynchronen Abtastzeitpunktes so durchzuführen, daß dieser mit der Lage des Korrelationsmaximums der zweiten Gruppe von Korrelationswerten übereinstimmt, welche im dritten Verfahrensschritt bestimmt wurde, und der so korrigierte chipsynchrone Abtastzeitpunkt maßgeblich ist, um die automatische Frequenznachführung breitbandig auf Frequenzakquisition zu schalten,
- in einem fünften Verfahrensschritt die Lage des Frames (91) zu bestimmen, indem über einen Zeitraum von mindestens 1,5 Framedauern Präambelkorrelationswerte bestimmt werden, die einen voreingestellten Schwellenwert überschreiten und welche Präambelkorrelationswerte Prüfungen dahingehend unterzogen werden,

  • daß ihre Abstände zum Korrelationsmaximum der zweiten Gruppe von Korrelationswerten, welche im dritten Verfahrensschritt bestimmt wurde, ein ganzzahliges Vielfaches der Dauer eines Slots (95) beträgt
  • und mindestens eine Gruppe von Präambelkorrelationswerten vorhanden ist, deren Abstände jeweils eine Slotdauer beträgt, und deren Anzahl der Anzahl der Slots einer Downlinkperiode (92) entspricht, gefolgt von oder folgend auf eine Periode ohne Präambelkorrelationswerte, deren Dauer um eine Slotdauer größer als die Anzahl der Slots einer Uplinkperiode (93) ist, und bei positiven Prüfungsergebnis den ersten der vorgenannt bestimmten Präambelkorrelationswerte als Framestart zu definieren, und dieser Zeitpunkt maßgeblich ist, um die automatische Frequenznachführung auf eine schmalbandige Frequenzacquisition umzuschalten,

b) und im folgenden Betriebszustand fortlaufend

- in einem sechsten Verfahrensschritt einmal pro Frame (91) den optimalen Zeitpunkt für die Abtastung zu bestimmen und nachzuführen, indem die Abtastung der Präambeln einer Downlinkperiode (92) von Slot zu Slot jeweils um einen Teilbetrag einer Chipdauer verschoben erfolgt, wobei die derart modifizierten Abtastzeitpunkte symmetrisch zum bisherigen Abtastzeitpunkt als dem Erwartungswert liegen, und über eine Mittelwertbildung der mit den Korrelationswerten bewerteten Abtastzeitpunkte der Abstand des optimalen Abtastzeitpunktes zum Erwartungswert bestimmt und der Abtastzeitpunkt für die nächstfolgende Downlinkperiode auf den so bestimmten optimalen Abtastzeitpunkt als neuen Erwartungswert eingestellt wird,
- in einem siebenten Verfahrensschritt einmal pro Slot (95) die Referenzphase für die kohärente Demodulation in diesem Slot zu bestimmen, indem auf Grund der a priori Kenntnis über die Modulation der Präambelsymbole in der Basisstation mit der Trägerbezugsphase Null die aus den Korrelationswerten der I- und Q-Empfangszweige der Teilnehmerstation errechnete Phasenlage als Referenzphase für die Demodulation der Daten des besagten Slots verwendet wird,
- in einem achten Verfahrensschritt die derart bestimmte Referenzphase während des Empfangs der Daten des betreffenden Slots zur Kompensation einer Phasendrift oder Frequenzablage zwischen Teilnehmerstation und Basisstation kontinuierlich nachgeführt wird, und
- in einem neunten Verfahrensschritt am Ende einer Downlinkperiode (92) die aktuell bestimmten Parameter zur Nachführung der Referenzphase an die Sendeeinrichtung der Teilnehmerstation zur Durchführung einer Phasenvorverzerrung zur Kompensation einer Phasendrift oder Frequenzablage zwischen Teilnehmerstation und Basisstation übergeben werden.

3. Verfahren nach Anspruch 1, **gekennzeichnet dadurch, daß** in der Uplinkrichtung (93) beim Zugriff einer Teilnehmerstation (4) auf den RACH (112) besagte Präambelsendung der Teilnehmerstation in der Basisstation genutzt wird, um

- in einem ersten Verfahrensschritt an Hand des Empfangs mindestens zweier Präambelsymbole, die mit der Codesequenz erster Form gespreizt sind, die Einleitung der Sendung einer Teilnehmerstation zu identifizieren, indem geprüft wird, ob Korrelationsergebnisse, die einen Schwellenwert überschreiten, entsprechend der Anzahl dieser Präambelsymbole und dem durch deren Sequenzlänge vorgegebenen Abstand, vorliegen,
- in einem zweiten Verfahrensschritt an Hand einer oder mehrerer nachfolgender Präambelsymbole, die mit der Codesequenz zweiter Form gespreizt sind, die optimale Lage des Abtastzeitpunktes zu bestimmen, indem die Lage des Korrelationsmaximums unter Verwendung eines Oversamplings mit einer höheren Auflösung als der reguläre Abtasttakt erfolgt, aus einer Mittelwertbildung der mit den Korrelationswerten bewerteten Abtastzeitpunkte der Abstand des optimalen Abtastzeitpunktes bestimmt wird und den Abtastzeitpunkt für den nachfolgenden Datenempfang auf den so ermittelten Zeitpunkt zu verschieben,

- in einem dritten Verfahrensschritt an Hand der Präambelsymbole, die mit der besagten Codesequenz zweiter Form gespreizt sind, die Referenzphase für die kohärente Demodulation der nachfolgenden Daten im RACH zu bestimmen, indem auf Grund der a priori Kenntnis über die Modulation der Präambelsymbole in der Teilnehmerstation mit der Trägerbezugsphase Null die aus den Korrelationswerten der I- und Q-Empfangszweige der Basisstation errechnete Phasenlage als Referenzphase für die Demodulation der Daten des RACH verwendet wird,

- in einem vierten Verfahrensschritt an Hand der im zweiten Verfahrensschritt ermittelten Werte zu berechnen, um welchen Delaywert die Teilnehmerstation ihre Aussendungen verschieben muß, damit der Empfang in der Basisstation slot-, symbol und chipsynchron zu den Aussendungen aller anderen Teilnehmerstationen erfolgt, und diesen Delaywert zusammen mit der Zuweisung eines Nutzkanals im BCH (110) an die Teilnehmerstation zu übermitteln,

4. Verfahren nach Anspruch 1, **gekennzeichnet dadurch, daß** in der Uplinkrichtung (93) beim Zugriff einer Teilnehmerstation (4) auf einen Timeslot (95) mit Berechtigung zur Präambelsendung besagte Präambelsendung in der Basisstation genutzt wird, um die Ablage des Sendezeitpunktes der besagten Teilnehmerstation vom Sollwert für einen slot-, symbol und chipsynchronen Empfang in der Basisstation zu messen, indem die Lage des Korrelationsmaximums unter Verwendung eines Oversamplings mit einer höheren Auflösung als der reguläre Abtasttakt erfolgt, aus einer Mittelwertbildung der mit den Korrelationswerten bewerteten Abtastzeitpunkte besagte Ablage bestimmt wird und als Korrekturwert des Sendezeitpunktes durch die Basisstation an die Teilnehmerstation übertragen wird.

5. Verfahren nach Anspruch 1 oder 2, **gekennzeichnet dadurch, daß** in der Downlinkrichtung (92) in einer speziellen Ausführung zu Beginn jedes Timeslots (95) durch die Basisstation in allen Codekanälen (90) nach den Präambeln (122) ein oder mehrere Referenzsymbole (123) gesendet werden, welche mit der Codesequenz des jeweiligen Codekanals gespreizt sind, und deren Umsetzung in die I- und Q-Zweige mit der Trägerbezugsphase Null erfolgt, und welche Referenzsymbole in den Teilnehmerstationen genutzt werden,

- um in dem genannten siebenten Verfahrensschritt entsprechend Anspruch 2 einmal pro Slot (95) die Referenzphase für die kohärente Demodulation in diesem Slot aus den Referenzsymbolen zu bestimmen, und

- und die daraus bestimmte Referenzphase in dem genannten achten Verfahrensschritt entsprechend Anspruch 2 während des Empfangs der Daten des betreffenden Slots kontinuierlich nachzuführen.

6. Verfahren nach Anspruch 1 oder 3, **gekennzeichnet dadurch, daß** in der Uplinkrichtung (93) des Airinterface des besagten Kommunikationssystems in einer speziellen Ausführung beim Zugriff einer Teilnehmerstation (4) auf den RACH (112) nach den Präambeln (122) Referenzsymbole gesendet werden, welche mit der Codesequenz des jeweiligen Codekanals gespreizt sind, in welchem der RACH angeordnet ist, und deren Umsetzung in die I- und Q-Zweige mit der Trägerbezugsphase Null erfolgt, und welche Referenzsymbole in der Basisstation genutzt werden, um die Referenzphase für die kohärente Demodulation der Datensignale im RACH zu bestimmen, indem auf Grund der a priori Kenntnis über die Modulation der Referenzsymbole in der Teilnehmerstation mit der Trägerbezugsphase Null die aus den Korrelationswerten der I- und Q-Empfangszweige in der Basisstation errechnete Phasenlage als Referenzphase für die Demodulation der Daten des RACH verwendet wird.

7. Verfahren nach Anspruch 1 und 4, **gekennzeichnet dadurch, daß** in der Uplinkrichtung (93) beim Zugriff einer Teilnehmerstation (4) auf die Timeslots (95) nach der einleitenden Schutzzeit (126) oder Präambeln (122) Referenzsymbole (123) gesendet werden, deren Umsetzung in die I- und Q-Zweige mit der Bezugsträgerphase Null erfolgt, und welche mit der Codesequenz des jeweiligen Codekanals gespreizt sind, die in der Basisstation genutzt werden, um

- In einem ersten Verfahrensschritt die Referenzphase für die kohärente Demodulation der Datensignale im jeweiligen Slot zu bestimmen, indem auf Grund der a priori Kenntnis über die Modulation der Referenzsymbole in der Teilnehmerstation mit der Trägerbezugsphase Null die aus den Korrelationswerten der I- und Q-Empfangszweige errechnete Phasenlage als Referenzphase für die Demodulation der Daten des betreffenden Slots verwendet wird,

- in einem zweiten Verfahrensschritt den Empfangspegel und das Signal/Stör-Verhältnis zu messen und unter Beachtung der Relation zu den entsprechenden Parametern in den parallelen Empfangszweigen der Basisstation Korrekturwerte für den Sendepegel der Teilnehmerstation zu bestimmen und an die Teilnehmerstation zu übertragen.

**EP 1 277 288 B1**

8. Verfahren nach Anspruch 1 oder 2, **gekennzeichnet dadurch, daß** in der Teilnehmerstation während der Datendemodulation eine Nachführung der Referenzphase durch eine entscheidungsrückgekoppelte Regelung erfolgt, indem

- in einem ersten Verfahrensschritt für jedes in einem Entscheider (30) entschiedene Symbol in Relation zum vorhergehenden Symbol ein unbewertetes Phasenfehlersignal $\Delta\varphi$ (35) bestimmt wird,
- in einem zweiten Verfahrensschritt

   • in einem ersten Rückkoppelzweig durch Multiplikation des $\Delta\varphi$ mit einem ersten Rückkoppelfaktor k1 (52) ein erstes bewertetes Phasenfehlersignal $\Delta f = k1*\Delta\varphi$ (53) und durch Integration desselben nach der Beziehung $\Delta f := \Delta f + k1*\Delta\varphi$ das akkumulierte Phasenfehlersignal (55) berechnet wird, und
   • in einem zweiten Rückkoppelzweig durch Multiplikation des $\Delta\varphi$ mit einem zweiten Rückkoppelfaktor k2 (50) ein zweites bewertetes Phasenfehlerslgnal $k2*\Delta\varphi$ (38) berechnet wird,

- in einem dritten Verfahrensschritt die Ausgangssignale der besagten Rückkoppelzweige addiert und durch Integration des Summensignals nach der Beziehung $\ominus := \ominus + \Delta f + k2*\Delta\varphi$ das akkumulierte Phasenkorrektursignal (40) berechnet wird,
- in einem vierten Verfahrensschritt das akkumulierte Phasenkorrektursignal (40) in einem Wandler (41) in eine komplexe Korrekturphase umgesetzt und besagte Korrekturphase mit dem komplexen Empfangssignal, bestehend aus den mit der Referenzphase bewerteten Eingangssignalen (27) und (28), multpliziert wird und die daraus berechneten I-Komponente (44) und Q-Komponente (45) dem Entscheider (30) zugeführt werden,

9. Verfahren nach Anspruch 1 oder 2 und 8, **gekennzeichnet dadurch, daß** in der Teilnehmerstation am Beginn eines Timeslots für den Zeitraum zwischen der Bestimmung der Referenzphase und dem Beginn der Datendemodulation eine Nachführung der Referenzphase erfolgt, indem

- in einem ersten Verfahrensschritt ein Phasenkorrektursignal $\ominus = \Delta f * s$ berechnet wird, wobei

   • $\Delta f$ der Wert des ersten bewerteten Phasenfehlersignals $\Delta f = k1*\Delta\varphi$ (53) ist, welcher zuletzt im vorangegangenen Timeslots bestimmt wurde und
   • s die Anzahl der Symbole zwischen der Bestimmung der Referenzphase und dem Beginn der Datendemodulation darstellt,

- in einem zweiten Verfahrensschritt eine Korrektur der Referenzphase entsprechend viertem Verfahrensschritt des Anspruch 8 erfolgt.

10. Verfahren nach Anspruch 1 oder 2 und 7, **gekennzeichnet dadurch, daß** im Uplink in den Teilnehmerstationen die den Referenzsymbolen (123) folgende Sendung der Daten mit einer Phasenvorverzerrung erfolgt, indem mit jedem Symboltakt

- in einem ersten Verfahrensschritt durch Integration eines Phasendifferenzsignals $\Delta f$ (60) ein akkumuliertes Phasenkorrektursignal nach der Beziehung $\ominus := \ominus + \Delta f$ berechnet wird, wobei $\Delta f$ der Wert des ersten bewerteten Phasenfehlersignals $\Delta f = k1*\Delta\varphi$ (53) ist, welcher am Ende der vorangegangenen Downlinkperiode (92) entsprechend neuntem Verfahrensschritt in Anspruch 2 bestimmt wurde,
- in einem zweiten Verfahrensschritt das akkumulierte Phasenkorrektursignal $\ominus$ in einem Wandler (62) in eine komplexe Korrekturphase umgesetzt und
- in einem dritten Verfahrensschritt besagte Korrekturphase mit dem komplexen Sendesignal multpliziert wird und die daraus berechneten I- und Q-Komponenten als phasenvorverzerrtes Ausgangssignal dem Sendeteil zugeführt werden.

11. Verfahren nach Anspruch 1 oder 3, **gekennzeichnet dadurch, daß** der RACH in einem Timeslot zwischen Downlinkperiode und Uplinkperiode des TDD in einem Codekanal angeordnet ist und die anderen Codekanäle in diesem Timeslot nicht mit Aussendungen belegt sind, und besagter RACH eine solche Dauer besitzt, daß in diesem Timeslot eine für den Laufzeitausgleich ausreichende Schutzzeit verbleibt, und die Laufzeitkorrektur für den slot-, symbol und chipsynchronen Empfang in der Basisstation erfolgt, indem

- eine Teilnehmerstation beim Access auf den RACH auf Grund fehlender a priori Kenntnisse über ihre Entfernung zur Basisstation zu einem frühestmöglichen Zeitpunkt nach der Downlinkperiode mit der Sendung beginnt, und entsprechend diesem Startzeitpunkt und der Dauer des RACH eine erste Zeitlage der Uplinkperiode berechnet,

- der von der Basisstation gemessene und im BCH (110) an die Teilnehmerstation übermittelte Delaywert beinhaltet, um wieviele Chipdauern und deren Bruchteile, entsprechend dem Oversampling des Meßvorgangs in der Basisstation, die Aussendungen der Teilnehmerstation zu verzögern sind,
- und die Teilnehmerstation durch Addition des besagten Delaywertes zu der ersten Zeitlage eine korrigierte Zeitlage der Uplinkperiode berechnet und diese für die weiteren Sendungen nutzt.

12. Verfahren nach Anspruch 1 oder 3, **gekennzeichnet dadurch, daß** in der Basisstation die Einrichtung, welche in der Uplinkrichtung (93) im RACH (112) den Empfangs der mit der Codesequenz erster Form gespreizten Präambelsymbole durchführt, auch nach Identifizierung eines Zugriff durch eine erste Teilnehmerstation weiterhin auf Empfang geschaltet bleibt, um Zugriffe durch weitere Teilnehmerstationen im Falle eines Random-Access zu erkennen und zu signalisieren, um auf Grund der Gefahr von Fehlinterpretationen den Zugriff für beide Teilnehmerstationen zurückzuweisen.

13. Verfahren nach Anspruch 1 oder 4, **gekennzeichnet dadurch, daß** in der Uplinkrichtung (93) in dem zyklischen Verfahren, in welchem in einem Multiframe (130) die Berechtigung zur Aussendung von Präambeln zugewiesen wird, die Berechtigung von Slot zu Slot jeweils auch in einen anderen der Codekanäle wechselt, und im jeweiligen Codekanal erst nach Durchlauf durch alle anderen Codekanäle wieder eine Berechtigung an einen nächsten Slot zur Präambelaussendung vergeben wird.

**Claims**

1. Method for synchronization within a radio communication system comprising the frequency synchronization, the carrier phase synchronization, the code phase synchronization and the frame synchronization, whereas said radio communication system involves a base station (1) which is connected to a plurality of subscriber stations (4) whereas the subscriber stations possess a telephony interface (6) to allow access to the PSTN as well as an ethernet interface (8) to allow access to the internet which can be used independly and simultaneously of each other, whereas the communications system possesses separate access networks to the PSTN and to the internet and the resource sharing between both access networks is adapted load dependent and the air interface operates in a DS CDM/CDMA with embedded TDM/TDMA and TDD mode, **characterized by**

    a) a synchronization procedure in downlink direction (92), wherefor the base station

    - in a second step inserts these preamble symbols as the very first symbols of the time slots (120) of all code channels,
    - in a third step converts these preamble symbols into inphase (I) and quadrature (Q) branch of the transmit modulator with the reference phase zero,
    - in a fourth step spreads these preamble symbols in I and Q branch by a code sequence which is identical for all time slots of all code channels and which is different with the code sequences for the subsequent transmitted data,
    - in a fifth step performs a synchronous modulation and transmission in the time slots of all code channels and - by the additive superposition according to the number of code channels - offers a higher symbol energy within the preamble symbols compared to the data symbols of an individual code channel,

    b) a synchronization procedure for the RACH transmission (112) in uplink direction (93), wherefor a subscriber station (4) having access to the RACH

    - in a first step generates preamble symbols,
    - in a second step inserts at least three preamble symbols as first symbols into the RACH,
    - in a third step converts these preamble symbols into I and Q branch of the transmit modulator with the reference phase zero,
    - in a fourth step spreads at least the first two preamble symbols in I and Q branch by a first code sequence which is shorter compared to the code sequences for the subsequent transmitted data,
    - in a fifth step spreads all following preamble symbols in I and Q branch by a second code sequence which is longer compared to the code sequences for the subsequent transmitted data,
    - in a sixth step performs the modulation and transmission in RACH,

c) a synchronization procedure for the data transmission in data slots (95) in uplink direction (93), wherefor the subscriber stations (4)

- check if a time slot of a code channel assigned for data transmission according to a predefined scheme in a multi frame is exclusively provided for the transmission of preamble symbols,
- and that subscriber station for which the mentioned condition is applicable decides to perform the procedure steps 1 to 5 according to a) analogously within this individual time slot,
- whereas all other subscriber stations insert a guard time instead of the preamble symbols for transmission.

2. Method according to claim 1, **characterized by** a preamble transmission of the base station in downlink direction of at least one preamble symbol which is used in the subscriber stations

   a) during a ramp up after the first setting into operation or after interruption of radio connection

- in a first step to identify the proper base station to be registered by means of an a priori knowledge of the preamble sequence of this base station,
- in a second step to determine the proper chip position of the preamble correlation maximum during an adjustable observation duration of at least one frame and to pass over to the next step of the procedure if this said preamble correlation maximum is higher than a certain predefined amplitude threshold,
- in a third step to determine and to correct the frequency difference to the base station by calculating the position of said preamble correlation maximum each in two consecutive frames with a higher time resolution relative to the regular sampling rate due to measuring two groups of oversampled and correlated signal values and by determining the temporal drift of these maximum positions in consecutive frames and to realize a coarse adjustment of the frequency,
- in a fourth step to perform a subsequent adjustment of the chip synchronous sampling point so that it is in coincidence with the position of the maximum of the said second group of correlation values as determined by the said third step of the procedure and the corrected chip synchronous sampling point being the proper sampling point to switch the frequency control loop into a broadband frequency control mode,
- in a fifth step to determine the position of the frame (91) by calculating the preamble correlation values during at least 1.5 times a frame duration which are above a certain predefined amplitude threshold and which are checked according to the following rules

  • that their distances to the correlation maximum of the said second group of correlation values as determined by the said third step of the procedure being an integral number of the duration of a slot (95)
  • and at least one group of preamble correlation values being existent whose distances are equal to the slot duration and whose numbers are equal to the number of slots within a downlink period (92) whereas a period without preamble correlation values being before or behind of it whose duration is bigger by one than the number of slots of an uplink period (93),

and in case of passing the test to define the first of the said predetermined preamble correlation values being the frame start and being the proper sampling point to switch the frequency control loop into a narrowband frequency control mode,
b) and during the following operation mode continously

- in a sixth step to determine and to adjust once per frame (91) the proper sampling point by shifting the sampling point for the preambles of a downlink period (92) in each slot by a fraction of a chip duration with the modified sampling points being arranged symmetrically to the original sampling point as the expected value and to position the updated sampling point as the new expected value by averaging the weighted correlation results of the actual sampling points and by determining the difference of the proper sampling point to the expected value,
- in a seventh step to determine once per slot (95) the reference phase for the coherent demodulation within this slot by having the a priori knowledge on the modulation of the preamble symbols with zero reference phase in the base station and by calculating the phase from the correlation values in the I and Q receiver branches of the subscriber station and using it as the reference phase for the data demodulation in the said slot,
- in an eighth step to update continously the calculated reference phase during the data reception of the corresponding slot to compensate for a phase drift or frequency difference between the subscriber station and the base station, and

- in a ninth step to hand over the effective parameters at the end of the downlink period (92) to the transmitter of the subscriber station to perform a pre-distortion of the phase thereby compensating a phase drift or frequency difference between subscriber station and base station.

3. Method according to claim 1 **characterized by** said preamble transmission of the subscriber station in uplink direction (93) in case of access to the RACH (112) wich is used in the base station

- in a first step to identify the start of the transmission of a subscriber station by means of detecting at least two preamble symbols spread by a code sequence of a first kind by checking those correlations values versus a predefined threshold value having an appropriate number and distance defined by the code sequence,
- in a second step to determine the proper position of the sampling point by means of one or more consecutive preamble symbols, spread by a code sequence of a second kind, by oversampling compared to the regular sampling rate and calculating the position of the correlation maximum by averaging the weighted correlation results of the actual sampling points and determining the difference of the proper sampling point and for the following data reception to shift the sampling point to the proper sampling point,
- in a third step to determine the reference phase for the following coherent data demodulation in the RACH on the basis of the preamble symbols of the second kind and by having the a priori knowledge on the modulation of the preamble symbols with zero reference phase in the subscriber station and by calculating the phase from the correlation values in the I and Q receiver branches of the base station and using it as the reference phase for the data demodulation in the RACH,
- in a fourth step to calculate by means of the values of the said second step of this procedure by which delay the subscriber stations have to shift their starting time of transmission to ensure a slot synchronous, symbol synchronous and chip synchronous reception in the base station in respect of the transmissions of all other susbcriber stations and to transfer in the BCH (110) this delay parameter together with the assignment of a specific data channel.

4. Method according to claim 1 **characterized by** said preamble transmission of a subscriber station (4) in uplink direction (93) in case of access to a time slot (95) with the permission to transmit a preamble which is used in the base station to determine the difference of the effective starting time of transmission to its nominal value for a slot synchronous, symbol synchronous and chip synchronous reception by oversampling compared to the regular sampling rate and calculating the position of the correlation maximum by averaging the weighted correlation results of the sampling points and thereby determining said difference to the proper point of reception and to transfer an updated starting time of transmission to the subscriber station by the base station.

5. Method according to claim 1 or 2, **characterized in** a specific implementation by the transmission of one or more reference symbols (123) in all code channels of the base station at the beginning of each time slot (95) after the preambles (122) in the downlink direction (92) whereas these reference symbols are spread by the individual code sequence of a code channel and are converted into the I and Q branch with the zero reference phase and are used by the subscriber stations

- to determine during the said seventh step of the procedure according to claim 2 the reference phase for the coherent data demodulation within this slot once per slot (95), and
- to update continously the calculated reference phase during the data reception of the corresponding slot during the said eighth step of the procedure according to claim 2.

6. Method according to claim 1 or 3, **characterized in** a specific implementation by the transmission of reference symbols (123) after the preambles (122) during access of a subscriber station to the RACH (112) in the uplink direction (93) of the air interface of the said communication system whereas these reference symbols are spread by the individual code sequence of the RACH code channel and are converted into the I and Q branch with the zero reference phase and are used by the base station to determine the reference phase for the coherent data demodulation within the RACH by having the a priori knowledge on the modulation of the reference symbols with zero reference phase in the subscriber stations and by calculating the phase from the correlation values in the I and Q receiver branches of the base station and using it as the reference phase for the data demodulation in the RACH.

7. Method according to claim 1 and 4, **characterized by** the transmission of reference symbols (123) after the prefacing guard time (126) or preambles (122) during access of a subscriber station to the time slots (95) in the uplink direction (93) whereas these reference symbols are spread by the individual code sequence of the code channel and are converted into the I and Q branch with the zero reference phase and are used by the base station

- in a first step to determine the reference phase for the coherent data demodulation within this slot by having the a priori knowledge on the modulation of the reference symbols with zero reference phase in the subscriber stations and by calculating the phase from the correlation values in the I and Q receiver branches of the base station and using it as the reference phase for the data demodulation within this slot,
- in a second step to measure the signal level and the signal-to-interference ratio and to determine updated values for the transmit power of the subscriber station and transfer it to the subscriber station by taking into account the relationship of the individual values of these parameters in parallel receiver branches of the base station.

8. Method according to claim 1 or 2, **characterized by** a tracking of the reference phase during demodulation with a decision feedback control loop in the subscriber station that

- determines in a first step by means of a decision device (30) an unweighted phase error signal $\Delta\varphi$ (35) for each decided symbol in comparison to the preceding symbol,
- calculates in a second step

  • in a first feedback loop a first weighted phase error signal $\Delta f = k1 * \Delta\varphi$ (53) by multiplication of $\Delta\varphi$ and a first feedback coefficient k1 (52) and an accumulated phase error signal (55) by its integration according to the formula $\Delta f := \Delta f + k1*\Delta\varphi$ and
  • in a second feedback loop a second weighted phase error signal $k2*\Delta\varphi$ (38) by multiplication of $\Delta\varphi$ and a second feedback coefficient k2 (50),

- adds in a third step the output signals of said feedback loops and calculates the accumulated phase control signal (40) by the integration of the sum signal according to the formula $\ominus := \ominus + \Delta f + k2*\Delta\varphi$
- converts in a fourth step by means of a converter the accumulated phase control signal (40) into a complex control phase whereas said control phase is multiplied by the complex receiver signal consisting of the input signal (27) and (28) weighted by the reference phase and the calculated I component (44) and Q component (45) are fed into the decision device (30).

9. Method according to claim 1 or 2 and 8, **characterized by** a tracking of the reference phase at the start of a time slot during the time between determining a reference phase and starting t he data demodulation whereas the subscriber station

- calculates in a first step a phase control signal $\ominus = \Delta f * s$ with

  • being $\Delta f$ the value of the first weighted phase error signal $\Delta f = k1*\Delta\varphi$ (53) as determined during the preceding time slot and
  • being s the number of symbols between determining a reference phase and starting the data demodulation,

- adjusts in a second step the reference phase according to said fourth step in the procedure of claim 8.

10. Method according to claim 1 or 2 and 7, **characterized by** a pre-distortion of the phase for the uplink transmission of data following the reference symbols whereas the subscriber station for each symbol clock

- calculates in a first step by integration of a phase difference signal $\Delta f$ (60) an accumulated phase control signal according to the formula $\ominus := \ominus + \Delta f$ with $\Delta f$ being the first weighted phase error signal $\Delta f = k1*\Delta\varphi$ (53) as determined at the end of the preceding downlink period (92) according to the said ninth step of the procedure in claim (2),
- converts in a second step by means of a converter (62) the accumulated phase control signal (40) into a complex control phase,
- multiplies in a third step the said control phase by the complex transmit signal and feeds the calculated I and Q components as the pre-distorted in phase signal into the transmitter.

11. Method according to claim 1 or 3, **characterized by** a RACH assigned to a certain code channel and a time slot between downlink period and uplink period and no other code channel assigned to this time slot for data transmission and said RACH having such a duration that a sufficient guard time is remaining for a propagation delay compensation whereas a propagation delay compensation is realized for a slot synchronous, symbol synchronous and chip synchronous receiption in the base station by performing

- start the transmission of a subscriber station for access to the RACH as early as possible after downlink period due to absence of a priori knowledge on the distance to the base station and by calculating a first time marker for the uplink period according to this start time and the duration of the RACH,
- a calculation of a propagation delay value which contains a number of chips and fractions of a chip for delaying the start of transmission in a subscriber station according to a value measured by an oversampling procedure in the base station and transfer said value within the BCH (110) to the subscriber station,
- a calculation to update the time marker for the uplink period in the subscriber station by adding said delay value to the first time marker and using said updated time marker for the subsequent transmissions.

**12.** Method according to claim 1 or 3, realized by base station means to receive the preamble symbols spread by a code sequence of a first kind in uplink direction (93) within the RACH (112) that remains in receiving mode after detection of an access by a first subscriber station to detect and signalize a possible access of other subscriber stations and to reject the access procedure for both subscriber stations due to a potential danger of a misinterpretation.

**13.** Method according to claim 1 or 4, **characterized by** a cyclic procedure in uplink direction (93) that assigns the authorization to transmit preambles in a multi frame (130) and changes said authorization in each case to a different code channel from slot to slot and does not assign the authorization to transmit preambles in the respective code channel in a following slot u ntil passing all other code channels.

**Revendications**

**1.** Procédé pour la synchronisation dans un système de communication radio, comprenant la synchronisation de fréquences, de phases porteuses, des phases code et des frame. Ce système de communication radio comprend une station de base (1), reliée au moyen d'un interface air (3) à une multitude de stations participantes (4), dont les stations participantes disposent aussi bien d'un interface participant (6) pour l'accès au PSTN et d'un interface Ethernet (8) pour l'accès à Internet, qui sont utilisables aussi bien de façon indépendante que simultanément, et le système de communication, qui réalise des réseaux d'accès distincts au PSTN et à Internet, cependant la répartition de la capacité entre les deux réseaux d'accès est adaptée en fonction de la charge et l'interface air fonctionne avec DS CDM/CDMA et un TDM/TDMA et TDD intercalé, **caractérisé en ce que** :

a) pour la synchronisation de la transmission dans la direction d'une liaison descendante (92) la station de base (1)

- génère, dans une première étape du procédé, des symboles de préambule (122), identiques pour tous les intervalles de temps (95) de tous les canaux code dans la liaison descendante (92)
- insère, dans une seconde étape du procédé, les symboles de préambule respectivement comme premiers symboles dans les intervalles de temps (120) de tous les canaux code.
- fait changer de place, dans une troisième étape du procédé, les symboles de préambule dans les branches I et Q de l'unité de transmission avec la phase porteuse de référence zéro,
- déploie, durant la quatrième étape du procédé, les symboles de préambule dans les branches I- et Q avec une séquence code identique pour tous les intervalles de temps des canaux code, qui ne concordent pas avec aucune des séquences code pour les données à transmettre suivantes
- entreprend, durant la cinquième étape du procédé, la modulation et l'émission dans l'intervalle de temps de tous les canaux code de façon synchrone, et par recouvrement additif, conformément au nombre de canaux code, dépasse l'énergie du symbole des symboles de préambule des symboles de donnée de chaque canal code.

b) pour la synchronisation de la transmission dans RACH (112) dans la direction montante (93), une station participante (4) ayant accès à RACH

- génère, lors une première étape du procédé, des symboles de préambule
- insère, dans une seconde étape du procédé, au moins trois symboles de préambule, respectivement comme premiers symboles dans le RACH

- fait changer de place, dans une troisième étape du procédé, les symboles de préambule dans les branches I et Q de l'unité de transmission avec la phase porteuse de référence zéro,
- déploie, durant la quatrième étape du procédé, au moins les deux premiers symboles de préambule dans les branches I- et Q avec une première séquence code, raccourcie par rapport aux séquences code de la transmission de données.
- déploie, durant la cinquième étape du procédé, les symboles de préambule suivants dans les branches I et Q avec une seconde séquence code, prolongée par rapport aux séquences codes de la transmission de données,
- entreprend, durant la sixième étape du procédé, la modulation et l'émission dans le RACH,

c) pour la synchronisation de la transmission des intervalles de données (95) dans la direction de liaison montante (93), les stations participantes (4)

- contrôlent, dans une première étape du procédé, si un intervalle de temps suivant pour la retransmission d'un code canal, conformément au schéma d'attribution, est prévu dans une multitrame (130), exclusivement pour la retransmission du symbole de préambule
- la station participante pour laquelle ceci s'applique, exécute ensuite les étapes de procédés 1 à 5 conformément à a) se rapportant en substance à cet intervalle de temps
- et toutes les autres stations participantes insèrent, à la place des symboles de préambule, une durée de protection dans la transmission.

2. Procédé selon la revendication 1, **caractérisé en ce que** dans la direction descendante (92) l'émission de préambule indiquée de la station de base comprend au minimum un symbole de préambule, et que cette émission de préambule est utilisée dans les stations participantes pour:

a) lors d'un démarrage après une première mise en service ou après une interruption intermittente de la connexion

- identifier, dans une première étape du procédé, à l'aide de la connaissance à priori de la séquence de préambule de la station de base sur laquelle doit s'effectuer une mise en service, la station de base.
- déterminer, durant la seconde étape du procédé, la position du chip d'une valeur de corrélation de préambule la plus élevée, requérant une période d'observation ajustable s'étendant au moins sur la durée d'un frame (91), pour passer ensuite à l'étape suivante, lorsque ce maximum de corrélation s'élevait à une valeur supérieure que la valeur-seuil prédéfinie.
- déterminer et corriger, dans une troisième étape du procédé, la déviation de fréquence comme station de base, en mesurant, dans l'espace d'un intervalle de temps, au moment de l'identification, au cours de la seconde étape du procédé, du positionnement du maximum de corrélation indiqué avec l'utilisation d'un suréchantillonnage comportant une résolution supérieure à la cadence de balayage régulière, deux groupes de valeur de corrélation, et en déterminant le positionnement du maximum de corrélation dans les groupes cités et en déterminant la dérive du positionnement du maximum de corrélation en relation avec la cadence de balayage régulier et de déterminer au moyen de la dérive citée de la réception de fréquence et d'entreprendre un premier ajustage dédié de la fréquence.
- de procéder, dans une quatrième étape du procédé, à une re-correction du moment de balayage synchrone avec le chip de façon à ce que celui-ci corresponde au positionnement du maximum de corrélation du deuxième groupe de valeurs de corrélation, déterminé dans la troisième étape du procédé. La cadence de balayage synchrone avec le chip ainsi corrigé est déterminant pour brancher sur bande large la poursuite de fréquence automatique sur acquisition de fréquences,
- déterminer, dans une cinquième étape du procédé, le positionnement du frame (91) en déterminant sur un laps de temps d'au moins 1,5 durées de frame les valeurs de corrélation de préambule qui dépassent une valeur-seuil prédéfinie. Ces valeurs de corrélation de préambule sont examinées quant au fait que :

  - leur distance au maximum de corrélation du second groupe de valeurs de corrélation, déterminées dans la troisième étape du procédé, comporte un multiplage entier de la durée de l'intervalle de temps (95)
  - et qu'il y ait au moins un groupe de valeurs de corrélation de préambule dont les distances comportent respectivement une durée d'intervalle de temps, et dont le nombre corresponde au nombre d'intervalle de temps d'une durée de liaison descendante, suivi de ou suivant une période sans valeur de corrélation de préambule, dont la durée est supérieure d'une durée d'intervalle de temps que le nombre d'intervalles de temps d'une liaison montante (93), et lors de résultats de contrôle positifs, de définir la première des valeurs de corrélation de préambule déterminées ci-dessus comme démarrage de frame, et ce moment est déterminant pour commuter la mise à jour de fréquence automatique sur une acquisition de fréquence à bande étroite

b) et dans l'état de service suivant continu

- de déterminer et de mettre à jour, dans une sixième étape du procédé, une fois par frame (91 ) le moment optimal de balayage, le balayage des préambules d'une période de liaison descendante (92) d'intervalle de temps à intervalle de temps s'effectuant respectivement en décalé d'un élément d'une durée de chip, les moments de balayage modifiés ainsi étant symétriques au moment de balayage antécédent comme valeur attendue, et sur une constitution de valeur moyenne des moments de balayage évalués avec les valeurs de corrélation, la distance du moment de balayage optimale par rapport à la valeur attendue est déterminée et le moment de balayage pour la période de liaison descendante suivante est réglé sur le moment de balayage déterminé de cette façon comme nouvelle valeur attendue,
- de déterminer dans une septième étape du procédé, une fois par intervalle de temps (95) la phase de référence pour la démodulation cohérente dans cet intervalle de temps, en utilisant, du fait de la connaissance à priori sur la modulation des symboles de préambule dans la station de base avec la phase porteuse de référence zéro, le positionnement de phase calculé à partir des valeurs de corrélation des branches de réception I et Q de la station participante comme phase de référence pour la démodulation des données des intervalles de temps cités
- de mettre à jour de façon continuelle, dans une huitième étape du procédé, la phase de référence déterminée ainsi pendant la réception des données de l'intervalle de temps concerné pour la compensation d'une dérive de phase ou d'une déviation de fréquence entre la station participante et la station de base, et
- soient délivrés à l'installation émettrice de la station participante, dans une neuvième étape du procédé, à l'issue d'une période de liaison descendante, (92), les paramètres déterminés actuellement pour la mise à jour de la phase de référence, pour l'exécution d'une préaccentuation de phase pour la compensation d'une dérive de phase ou d'une déviation de fréquence entre la station participante et la station de base.

3. Procédé selon la revendication 1, **caractérisé en ce que** dans la direction de liaison montante (93), lors de l'accès d'une station participante (4) sur le RACH (112), l'émission de préambule de la station participante soit utilisée dans la station de base pour

- identifier, dans une première étape du procédé, au moyen de la réception d'au moins deux symboles de préambule, étant déployés avec la séquence code de première forme, l'introduction de l'émission d'une station participante, en contrôlant si les résultats de corrélation qui dépassent une valeur seuil sont disponibles, conformément au nombre de ces symboles de préambule et la distance imposée par leur longueur de séquence
- déterminer, dans une seconde étape du procédé, au moyen d'un ou plusieurs symboles de préambule se succédant, étant déployés avec la séquence code de seconde forme, le positionnement optimal du moment de balayage, en effectuant le positionnement du maximum de corrélation en utilisant un suréchantillonnage avec une résolution plus élevée que la cadence de balayage régulière, la distance du moment de balayage optimal étant déterminée par une constitution de valeur moyenne des moments de balayage évalués avec les valeurs de corrélation et décaler le moment de balayage pour la réception de données s'en suivant sur le moment ainsi déterminé,
- de déterminer, dans une troisième étape du procédé, au moyen des symboles de préambule, déployés avec la séquence code de seconde forme citée, la phase de référence pour la démodulation cohérente des données suivantes dans le RACH, en utilisant, en raison de la connaissance a priori sur la modulation des symboles de préambule dans la station participante avec la phase porteuse de référence zéro, le positionnement de la phase calculé comme phase de référence pour la démodulation des données du RACH.
- de calculer, dans une quatrième étape du procédé, au moyen des valeurs identifiées dans la seconde étape du procédé, la valeur de temporisation avec laquelle la station participante doit décaler ses émissions afin que la réception dans la station de base soit synchrone au niveau de l'intervalle de temps, du symbole et du chip par rapport aux émissions de toutes les autres stations participantes, et transmettre cette valeur de temporisation conjointement avec l'attribution d'un canal d'exploitation dans le BCH (110) à la station participante.

4. Procédé selon la revendication 1, **caractérisé en ce que** dans la direction de liaison montante (93), lors de l'accès d'une station participante (4) sur un intervalle de temps (95), avec autorisation d'émission de préambule, cette émission de préambule soit utilisée dans la station de base pour mesurer la déviation du moment de transmission de la station participante citée de la valeur de consigne pour une réception synchrone dans l'intervalle de temps, le symbole et le chip de la station de base, en effectuant le positionnement du maximum de corrélation en utilisant un suréchantillonnage avec une résolution plus élevée que la cadence de balayage régulière, de déterminer la réception citée par la constitution d'une valeur moyenne des moments de balayage déterminés par les valeurs de corrélation, et transmis par la station de base à la station participante comme valeur corrigée du moment de transmission

5.  Procédé selon l'une des revendications 1 ou 2, **caractérisé en ce que** dans la direction d'une liaison descendante (92), dans une exécution spéciale au début de chaque intervalle de temps (95), la station de base émet, dans tous les canaux code (90) après les préambules (122), un ou plusieurs symboles de référence (123), déployés avec la séquence code du canal code respectif, et dont la transposition dans les branches I et Q est effectuée avec la phase porteuse de référence zéro, et dont les symboles de référence sont utilisés dans les stations participantes,

    -   pour déterminer, dans la septième étape du procédé citée, la phase de référence pour la démodulation cohérente dans cet intervalle de temps des symboles de référence, et ce conformément à la revendication 2, une fois par intervalle de temps (95)
    -   et de mettre à jour de façon continue la phase de référence déterminée ainsi dans la huitième étape du procédé citée, conformément à la revendication 2, pendant la réception des données des intervalles de temps concernés.

6.  Procédé selon l'une des revendications 1 ou 3, **caractérisée en ce que** des symboles de références sont émis après les préambules (122) dans la direction d'une liaison montante (93) de l'interface air du système de communication cité, dans une exécution spéciale lors de l'accès d'une station participante (4) sur le RACH (112), déployés avec la séquence code du canal code respectif dans lequel le RACH, et dont la transposition s'effectue dans les branches I et Q avec la phase porteuse de référence zéro, et dont les symboles de référence sont utilisés dans la station de base pour déterminer la phase de référence pour la démodulation cohérente des signaux de données dans le RACH, en utilisant, en raison de la connaissance à priori sur la modulation des symboles de référence dans la station participante avec la phase porteuse de référence zéro, le positionnement de la phase calculée à partir des valeurs de corrélation des branches de réception 1 et Q dans la station de base comme phase de référence pour la démodulation des données du RACH.

7.  Procédé selon l'une des revendications 1 et 4, **caractérisé en ce que** dans la direction d'une liaison montante (93) lors de l'accès d'une station participante (4) sur les intervalles de temps (95) après la durée de protection (126) introductive ou des préambules (122), des symboles de références sont émis, dont la transposition dans les branches 1 et Q s'effectue avec la phase porteuse de référence zéro, et qui sont déployés avec la séquence code du canal code respectif, utilisés dans la station de base, pour

    -   déterminer, dans une première étape du procédé, la phase de référence pour la démodulation cohérente des signaux de donnée dans l'intervalle de temps respectif, en utilisant, en raison de la connaissance à priori de la modulation des symboles de référence dans la station participante avec la phase porteuse de référence zéro, le positionnement de la phase, calculé à partir des valeurs de corrélation des branches de réception I et Q, comme phase de référence pour la démodulation des données des intervalles de temps concernés,
    -   mesurer, dans une seconde étape du procédé, le niveau de réception et le rapport signal/parasite, et, en observant le rapport aux paramètres respectifs dans les branches de réception de la station de base, déterminer des valeurs de correction pour le niveau d'émission de la station participante et les transmettre à la station participante.

8.  Procédé selon l'une des revendications 1 ou 2, **caractérisé en ce que** dans la station participante, pendant la démodulation des données, une mise à jour de la phase de référence s'effectue par un règlement de décision rétroactive, par le fait que :

    -   dans une première étape du procédé, pour chaque symbole déterminé dans un décideur (30) en relation avec le symbole précédent, un signal estimé d'erreur de phase $\Delta\varphi$ (35) est déterminé
    -   dans une seconde étape du procédé

        •   dans une première branche de rétroaction, un premier signal précisé d'erreur de phase $\Delta f = k1 * \Delta\varphi$ (53) est calculé par la multiplication d'un $\Delta\varphi$ avec un premier facteur de rétroaction k1 (52), et par l'intégration d'après la relation $\Delta f := \Delta f + k1*\Delta\varphi$, le signal accumulé d'erreur de phase est calculé, et

- dans une seconde branche de rétroaction, un second signal précisé d'erreur de phase k2*Δφ (38) est calculé par la multiplication du Δφ avec un second facteur de rétroaction k2 (50),

    - dans une troisième étape du procédé, les signaux de sortie des branches de rétroaction citées sont additionnés et le signal de correction de phase accumulé soit calculé par l'intégration des signaux additionnés d'après la relation ⊖ := ⊖+Δf+k2*Δφ,
    - dans une quatrième étape du procédé, le signal de correction de phases accumulé (40) dans un convertisseur (41) soit transposé dans une phase de correction complexe et que la phase de correction citée soit multipliée avec le signal de réception complexe, composé des signaux d'entrée (27) et (28) précisés avec la phase de référence, et la composante I n(44) et composante Q (45) calculée ainsi soit apportée au décideur (30).

9. Procédé selon l'une des revendications 1 ou 2 et 8, **caractérisé en ce que** dans la station participante au début d'un intervalle de temps pour la période entre la détermination de la phase de référence et le début de la démodulation de donnés, une mise à jour de la phase de référence s'effectue, par le fait que :

    - dans une première étape du procédé, un signal de correction de phase ⊖ = Δf* s est calculé, où :

        - Δf est la valeur un premier signal précisé d'erreur de phase Δf = k1 *Δφ (53) précisé qui a été déterminé en dernier dans l'intervalle de temps écoulé et
        - s représente le nombre de symboles entre la détermination de la phase de référence et le début de la démodulation de données,

    - dans une seconde étape du procédé, une correction de la phase de référence s'effectue, conformément à la quatrième étape du procédé de la revendication 8

10. Procédé selon l'une des revendications 1 ou 2 et 7, **caractérisé en ce que** dans la direction d'une liaison montante dans les stations participantes, l'émission de données, succédant aux symboles de référence (123), s'effectue avec une préaccentuation de phase, par le fait que pour chaque cadence de symbole

    - dans une première étape du procédé, par l'intégration d'un signal de différence de phase f (60), un signal de correction de phase accumulé est calculé d'après la relation ⊖ : = ⊖ + Δf, où Δf est la valeur un premier signal précisé d'erreur de phase Δf = k1* Δφ (53) précisé, qui a été déterminé à la fin de la période d'une liaison descendante 92) précédente, déterminé conformément à la neuvième étape de procédé dans la revendication 2
    - dans une seconde étape du procédé, le signal de correction de phase accumulé ⊖ est transposé dans un convertisseur (62) dans une phase de correction complexe et
    - dans une troisième étape du procédé, la phase de correction citée est multipliée avec le signal émetteur complexe et les composantes 1 et Q issues de ce calcul sont affectées à la pièce émettrice comme signal de sortie à phases préaccentuées.

11. Procédé selon l'une des revendications 1 ou 3, **caractérisé en ce que** le RACH est disposé dans un intervalle de temps entre la période de liaison descendante et la période de liaison montante du TDD dans un canal code, et que les autres canaux code dans cet intervalle de temps ne sont pas occupés par des émissions, et le RACH cité dispose d'une durée telle que dans cet intervalle de temps, une durée de protection suffisante demeure pour l'équilibrage du temps de propagation, et la correction du temps de propagation pour la réception synchrone dans le temps, le symbole et le chip soit effectuée dans la station de base, par le fait que :

    - une station participante, lors de l'accès au RACH, en raison de connaissance à priori manquante sur la distance à la station de base, commence l'émission le plus rapidement possible après la période de liaison descendante, et conformément à ce moment de démarrage et à la durée du RACH, calcule un premier repère temporel de la période de liaison montante,
    - que la valeur de temporisation, mesurée par la station de base et transmise à la station participante dans le BCH (110), indique le nombre de durée de chip et de leurs fractions, conformément au suréchantillonnage de la procédure de mesure dans la station de base, avec lequel il faudra décaler les émissions de la station participante.
    - la station participante calcule, par l'addition de la valeur de temporisation citée, un repère temporel corrigé de la période de liaison montante par rapport au premier rapport temporel et l'utilise pour les émissions suivantes.

**12.** Procédé selon l'une des revendications 1 ou 3, **caractérisé en ce que** dans la station de base, le dispositif qui effectue d ans la direction d'une liaison montante (93) la réception des symboles de préambule déployés dans la séquence code de première forme dans le RACH, reste branché sur réception même après l'identification d'un accès par une première station participante, afin de pouvoir reconnaître et de signaliser l'accès d'autres stations participantes dans le cas d'un accès aléatoire, pour p ouvoir, en raison d'un risque de mauvaise interprétation, r efuser l'accès a ux d eux stations participantes

**13.** Procédé selon l'une des revendications 1 ou 4, **caractérisé en ce que** dans la direction d'une liaison montante (93), dans la procédure cyclique, dans laquelle dans une multitrame (130), une autorisation pour l'émission de préambules est attribuée, l'autorisation d'intervalle de temps à intervalle de temps change respectivement aussi dans un autre des canaux code, et dans chaque canal code respectif, une autorisation n'est attribuée à un intervalle de temps suivant pour l'émission de préambule qu'après passage dans tous les canaux code.

Figur 1

Figur 4

Figur 5

Figur 2a

Figur 2b

Figur 2c

Figur 3

Figur 6

Figur 7

Figur 9

Figur 8